# EUROPÄISCHE PATENTSCHRIFT

(11) **EP 2 739 886 B1**
(45) Veröffentlichungstag und Bekanntmachung des Hinweises auf die Patenterteilung: **10.02.2016**
(21) Anmeldenummer: 11752464.5
(22) Anmeldetag: 04.08.2011
(51) Int. Cl.: F16K 15/02, F16K 27/02

(54) **VENTIL**
VALVE
SOUPAPE

(43) Veröffentlichungstag der Anmeldung: 11.06.2014
(73) Patentinhaber: Bisig, Roland, 8840 Einsiedeln (CH); Ibrisimbegovic, Esad, 6312 Steinhausen (CH)
(72) Erfinder: Bisig, Roland, 8840 Einsiedeln (CH); Ibrisimbegovic, Esad, 6312 Steinhausen (CH)
(86) Internationale Anmeldenummer: PCT/EP2011/003911
(87) Internationale Veröffentlichungsnummer: WO 2013/017142

(56) Entgegenhaltungen:
- FR-A- 1 014 135
- US-A- 886 045
- US-A- 1 616 819
- US-A- 4 291 719
- US-A- 4 637 495

## Beschreibung

### Gebiet der Erfindung

Die Erfindung betrifft ein Ventil zum Steuern eines Volumenstroms eines Arbeitsfluids in einem Strömungspfad, insbesondere ein Ventil für eine hydraulische Steuereinrichtung zum Steuern eines hydraulischen Antriebs, wie er in Aufzugssystemen Verwendung findet. Weiterhin betrifft die Erfindung ein Verfahren zur Herstellung eines derartigen Ventils und eine Vorrichtung zur lastdruckkompensierten Minimierung der Schaltverzögerung mit dem erfindungsgemäßen Ventil für die Verwendung in einer Steuereinrichtung eines hydraulischen Antriebs.

### Hintergrund der Erfindung

Ventile werden zum Sperren oder gesteuerten Herstellen eines Volumenstroms eines Arbeitsfluids, bzw. eines flüssigen oder gasförmigen Strömungs- oder Druckmittels, auf nahezu allen technischen Gebieten verwendet, auf denen Fluide zur Übertragung und/oder Speicherung von Energie eingesetzt werden. Sie sind damit sowohl in Leistungsleitungen wie auch in Steuerleitungen von druckmittelbetriebenen Steuerungen oder Regelungen einsetzbar und ermöglichen insoweit mittelbar oder auch unmittelbar ganz allgemein den Betrieb druckmittelbetriebener Stellorgane jeglicher Art; hydraulische Steuerleitungen unterscheiden sind von hydraulischen Leistungsleitungen im Wesentlichen durch ihren geringeren Leitungsquerschnitt. Als Beispiele für derartige Stellorgane seien Servomotoren, Pumpen, Verbrennungsmotoren, Kompressoren, Kupplungen, Bremsen sowie hydraulische oder pneumatische Federn, Getriebe und Gestänge genannt. Ventilen kommt insoweit nicht nur eine wesentliche funktionelle Bedeutung innerhalb hydraulischer oder pneumatischer Systeme zu. Auf sie entfällt auch aufgrund ihrer vielfältigen Anwendung ein wesentlicher Anteil der Herstellkosten und Wartungskosten für solche Systeme.

Bei hydraulischen Antrieben wird die Antriebsenergie bekanntermaßen über den Druck und die Strömungsgeschwindigkeit eines im Kreislauf von einem Vorratsbehälter, der gewöhnlich als Ölwanne ausgebildet ist, über eine motorisch angetriebene Pumpe druckseitig zu einem hydraulischen Verbraucher und von diesem niederdruckseitig zurück in den Vorratsbehälter geführten Arbeitsfluids gesteuert. Bei der Pumpe handelt es sich üblicherweise um eine Hydropumpe mit konstantem oder variablem Fördervolumen, beispielsweise eine Schraubenspindelpumpe oder eine Radialkolbenpumpe, die von einem Elektromotor angetrieben wird. Als Verbraucher kommen Servomotoren bzw. Hydromotoren zur Erzeugung einer translatorischen oder rotatorischen Abtriebsbewegung zum Einsatz; erstere können als Hydraulikzylinder, letztere als Zahnradmotoren ausgebildet sein. Zur Steuerung des Volumenstroms des Arbeitsfluids zu und von dem hydraulischen Verbraucher ist hierbei in dem Strömungspfad zwischen der Pumpe und diesem eine Steuereinrichtung mit Ventilen vorgesehen. Bei den so gesteuerten Arbeitsfluiden handelt es sich vorzugsweise um Fluide auf Mineralölbasis, sogenannte Hydrauliköle, synthetische Fluide oder Fluide auf pflanzlicher Basis, wobei letztere sich insbesondere durch ihre Umweltverträglichkeit auszeichnen. Diese Arbeitsfluide können Additive enthalten, welche eine gezielte Beeinflussung einzelner Eigenschaften ermöglichen, wie etwa des Temperaturverhaltens, der Alterungsbeständigkeit oder der Korrosionswirkung.

In herkömmlicher Weise umfasst jedes in einer derartigen Steuereinrichtung eingesetzte Ventil ein Gehäuse mit einem Führungsbereich und mit Bohrungen, welche eine Einlassöffnung, eine Auslassöffnung und eine Steueröffnung des jeweiligen Ventils bilden, sowie einen Absperrkörper in Form eines Kolbens. Der Kolben ist dabei jeweils zum gleitenden Zusammenwirken in dem Führungsbereich des Gehäuses gelagert und zwischen einer Offenstellung, in der das Ventil geöffnet ist und eine Strömungsverbindung zwischen der Einlassöffnung und Auslassöffnung ermöglicht, und einer Schließstellung, in der das Ventil geschlossen ist und eine Strömungsverbindung zwischen der Einlassöffnung und Auslassöffnung verhindert, beweglich geführt. Jedes der Ventile weist zudem zwischen dem Gehäuse und dem Kolben ein Haltemittel auf, das gewöhnlich eine Druckfeder umfasst und den Kolben in einer jeweils definierten Ruhestellung, also in seiner Offen- oder Schließstellung, vorspannt.

Entsprechend dem jeweiligen zugrunde liegenden hydraulischen Schaltschema der Steuereinrichtung für einen hydraulischen Antrieb, ist jedes der Ventile mit seiner Einlassöffnung, Auslassöffnung und Steueröffnung mit dem Strömungspfad zur Leitung des Arbeitsfluids durch eine Strömungsverbindung verbunden. Als Strömungsverbindungen, bzw. Leitungsverbindungen zum Leiten des Arbeitsfluids, innerhalb eines derartigen Fluidsystems kommen grundsätzlich alle bekanntermaßen geeigneten Strömungsverbindungen infrage, also sowohl starre Leitungselemente, wie etwa Rohre oder Ausnehmungen in einem Gehäuse einer einzelnen Systemkomponente, als auch flexible Leitungselemente, wie etwa Schläuche, wobei die jeweiligen Strömungsverbindungen beispielsweise aus Metall und/oder Kunststoff gefertigt sein können. Strömungsverbindungen in Form von Bohrungen oder sonstige, etwa im Metallgussverfahren, in einem Gehäuseteil vorgeformte Ausnehmungen kommen insbesondere im Maschinenbau und in der Fahrzeugtechnik häufig zur Anwendung, da sie nicht nur auf äußerst platzsparende Weise in nahezu jeder Leitungsgeometrie herstellbar sind, sondern insbesondere auch problemlos nach den jeweils zu beachtenden Stabilitäts- bzw. Druckvorgaben sowie Dichtigkeitsvorgaben ausgelegt werden können.

Beispielhaft genannt sei diesbezüglich eine Steuereinrichtung für einen hydraulischen Antrieb, die den Arbeitsfluidfluss von einem Vorratsbehälter zu dem hydraulischen Antrieb und von diesem zurück in den Vorratsbehälter steuert. Eine derartige Steuereinrichtung umfasst gewöhnlich einen sogenannten Ventilblock, der in der angegebenen Art ausgebildet ist und zwischen zumindest einer Einlassöffnung und einer Auslassöffnung eine Strömungsverbindung mit jeweils einem Steuerventil zur Steuerung des Arbeitsfluidflusses in der Zuleitung und Ableitung des hydraulischen Verbrauchers sowie gegebenenfalls ein oder mehrere Vorsteuerventile zur Ansteuerung der beiden Steuerventile und die entsprechenden Strömungsverbindungen in Form von hydraulischen Leistungs- und Steuerleitungen zur bestimmungsgemäßen hydraulischen Kopplung der Ventile aufweist. Der Ventilblock ist üblicherweise aus Vollmetall als quaderförmiges Gehäuse ausgebildet und umfasst neben den Ausnehmungen für die Strömungsverbindungen auch Ausnehmungen zur Aufnahme der jeweiligen Ventile. Diese Ausnehmungen sind gewöhnlich als Sackbohrungen oder Ausfräsungen in dem Ventilblock ausgeführt und bilden entweder direkt das Gehäuse des jeweiligen Ventils, wobei die Innenfläche der Ausnehmung den Führungsbereich umfasst, oder den Sitz für ein gewöhnlich becher- oder rohrförmig separat ausgebildetes Ventilgehäuse. Während eine Ausnehmung mit einer durch Bohren oder Fräsen erhältlichen Oberflächengüte meist ausreicht, um als Sitz für ein separates Ventilgehäuse zu dienen, setzt die unmittelbare Verwendung einer Ausnehmung in dem Ventilblock als Führungsbereich für einen zwischen seiner Schließ- und Offenstellung beweglichen Kolben eine geeignete Oberflächenbearbeitung, etwa durch Rollieren, Schleifen, Läppen und/oder Honen, jedenfalls voraus, um die Ventilfunktion in der erforderlichen Weise sicherzustellen. Ein entsprechend ausgebildete Steuereinrichtung für einen hydraulischen Aufzug ist etwa in US 4,637,495 offenbart. Der dort angegebene Ventilblock umfasst zum einen Ventile, deren jeweiliger Führungsbereich direkt im Ventilblock ausgebildet ist, bei denen also der Ventilblock das Gehäuse mit dem jeweiligen Führungsbereich darstellt und insoweit als funktioneller Teil von dem jeweiligen Ventil mitumfasst ist. Zum anderen weist dieser bekannte Ventilblock aber auch Ventile mit separatem, becherförmigem Gehäuse auf. Für diese Ventile stellt der Ventilblock somit lediglich einen geeigneten Ventilsitz mit den erforderlichen Strömungsverbindungen dar, während das jeweilige Ventil eine ansonsten von dem Ventilblock völlig getrennte Funktionseinheit bildet.

Ventile dieser beiden Ausführungsformen sind grundsätzlich auf allen der eingangs angegebenen technischen Gebiete einsetzbar und nicht auf die in US 4,637,495 angegebene spezifische Verwendung beschränkt. Ihre Anpassung an des jeweilige Einsatzgebiet erfolgt im Wesentlichen durch eine geeignete Geometrie- und Materialwahl für die einzelnen Ventilkomponenten sowie durch eine entsprechende Bemessung der Haltekraft des Haltemittels, insoweit also lediglich durch eine geeignete Festlegung der Ventilparameter im Hinblick auf die Art des zu steuernden Arbeitsfluids, das Volumen des Arbeitsfluidstroms und den in dem Strömungspfad des Arbeitsfluids auftretenden Druck, bei ansonsten gleichbleibendem Ventilaufbau. Mit den in US 4,637,495 offenbarten Ventilausführungen ist es insoweit möglich, Volumenströme nahezu aller gebräuchlichen Arbeitsfluide bei den innerhalb des jeweiligen Fluidsystems, sei es hydraulischer oder pneumatischer Art, üblicherweise herrschenden Arbeitsfliddrücken zu steuern.

Allerdings weist jede der beiden Ventilausführungen Nachteile auf. So ist es bei der Ventilausführung mit dem direkt in dem Ventilblock ausgebildeten Führungsbereich für den beweglichen Kolben von Nachteil, dass diese wesentliche Ventilkomponente individuell mit dem Ventilblock hergestellt werden muss, was per se eine kostengünstige Massenfertigung ausschließt. Die vergleichsweise mit den übrigen Ausnehmungen in dem Ventilblock für einen Führungsbereich eines Ventils jedenfalls erforderliche deutlich höhere Oberflächengüte ist nur durch zusätzliche Bearbeitungsschritte bei der Herstellung des Ventilblocks, nämlich beispielsweise durch Rollieren, Schleifen, Läppen und/oder Honen, zu erreichen. Dieser Mehraufwand bei der Herstellung des Ventilblocks bedingt somit zum einen höhere Herstellkosten für den Ventilblock selbst und zum anderen höhere Herstellkosten für das Ventil. Ein weiterer wesentlicher Nachteil dieser Ventilausführung ist es, dass eine Beschädigung des Führungsbereichs, die etwa durch metallische Fremdpartikel in dem Arbeitsfluid in Folge von normalem Verschleiß beim Betrieb der Steuereinrichtung oder durch entsprechende Verunreinigungen in dem verwendeten Arbeitsfluid verursacht sein kann, unter Umständen nur durch den Austausch des gesamten Ventilblocks zu beheben ist. Folglich ist ein Ventil in dieser Ausführungsform nicht nur teuer in der Herstellung, sondern insoweit auch kostenintensiv im Betrieb bzw. bei der Wartung.

Zwar ist der letztgenannte Nachteil mit einem separaten Ventilgehäuse in der Art der zweiten in US 4,637,495 offenbarten Ventilausführung zu beheben, da ein solches Ventil bei einer Beschädigung ohne Weiteres ersetzt werden kann, ohne gleichzeitig auch den Ventilblock auszutauschen. Der Nachteil hoher Herstellkosten gilt jedoch auch für ein derartiges Ventil, und zwar insoweit, als der Werkstoffbedarf und Bearbeitungsaufwand bei der Herstellung des becher- oder rohrförmigen Ventilgehäuses groß sind. Unabhängig davon nämlich, ob die Ausnehmung des Ventilgehäuses zum gleitenden Zusammenwirken mit dem Kolben aus einem Stabmaterial, etwa durch Bohren oder Fräsen, oder aus einem Rohrmaterial hergestellt wird, erstreckt sich das Ventilgehäuse im Wesentlichen doch über die gesamte Ventillänge. Um eine Bewegung des Kolbens und damit die Ventilfunktion zu ermöglichen, muss das Ventilgehäuse zudem entsprechende Öffnungen aufweisen. Diese Öffnungen werden in der Regel individuell und entsprechend dem jeweiligen Verwendungszweck des Ventils in einem weiteren Fertigungsschritt, üblicherweise durch Bohren oder Fräsen, in der Gehäusewandung erzeugt. Ein weiterer Bearbeitungsschritt ist schließlich erforderlich, um die Innenfläche des Ventilgehäuses mit der für den Führungsbereich notwendigen Oberflächengüte zu versehen, so dass der Kolben bei seiner Bewegung zwischen seiner Schließ- und Offenstellung gleitend mit dem Führungsbereich zusammenwirken kann. Dieser Bearbeitungsschritt zur Oberflächenvergütung erfolgt, wie bereits vorstehend angegeben, üblicherweise durch Rollieren, Schleifen, Läppen und/oder Honen. Bei einem zylindrisch geformten Kolben, wie er in US 4,637,495 dargestellt ist, wird auf diese Weise in der Regel die gesamte Innenfläche des becherförmigen, bzw. in Form eines Hohlzylinders ausgebildeten, Ventilgehäuses im Bereich der dem Kolben benachbarten Zylindermantelfläche bearbeitet. Allein durch den Materialaufwand sowie durch Art und Umfang der bei der Herstellung des Ventilgehäuses erforderlichen Bearbeitungsschritte, ist somit die Herstellung eines solchen Ventils aufwendig und kostenintensiv, wobei ein wesentlicher Anteil der Herstellkosten insbesondere auf die Erzeugung der Ventilöffnungen entfällt.

Es ist daher die Aufgabe der Erfindung, ein Ventil anzugeben, welches zum Sperren oder gesteuerten Herstellen eines Volumenstroms eines Arbeitsfluids in einem Strömungspfad einer technischen Einrichtung zur Übertragung und/oder Speicherung von Energie, insbesondere in einer Steuereinrichtung für einen hydraulischen Antrieb, geeignet ist und die Nachteile des Standes der Technik überwindet, das mithin ein eigenes Ventilgehäuse mit einem Führungsbereich aufweist, welcher einfacher und kostengünstiger herstellbar ist, das zudem wartungsfreundlicher aufgebaut sowie kostengünstiger in Betrieb und Wartung ist und das schließlich insbesondere auch kostensparend im Rahmen einer Massenfertigung herstellbar ist. Weiterhin betrifft die Erfindung ein Verfahren zur Herstellung eines derartigen Ventils und eine hydraulische Vorrichtung für ein Arbeitsfluid mit einer besonderen Ausführungsform des erfindungsgemäßen Ventils.

### Zusammenfassung der Erfindung

Die der Erfindung zugrunde liegende Aufgabe wird dadurch gelöst, dass das Ventil in bekannter Weise zur Steuerung eines Volumenstroms eines Arbeitsfluids in einem Strömungspfad eine erste Ventilöffnung, eine zweite Ventilöffnung und eine dritte Ventilöffnung zur Strömungsverbindung mit dem Strömungspfad, einen Absperrkörper, der zwischen einer Offenstellung, in welcher die dritte Ventilöffnung geöffnet ist, und einer Schließstellung, in welcher die dritte Ventilöffnung durch den Absperrkörper verschlossen ist, beweglich ist, ein Führungsmittel, bzw. ein Gehäuse, zum Führen des Absperrkörpers zwischen der Offen- und der Schließstellung und ein Haltemittel zum Ausüben einer Haltekraft auf den Absperrkörper in der Schließstellung aufweist, wobei sich das erfindungsgemäße Ventil von Ventilen bekannter Bauart dadurch unterscheidet, dass der Absperrkörper wenigstens einteilig ausgebildet ist und das Führungsmittel in aufeinanderfolgender Anordnung einen ersten Führungsmittelteil mit einem ersten Führungsmittelbereich, einen zweiten Führungsmittelteil mit einem zweiten Führungsmittelbereich und einen dritten Führungsmittelteil mit einem dritten Führungsmittelbereich in fester Verbindung aufweist, wobei der erste und dritte Führungsmittelteil zum Umschließen des Absperrkörpers ausgebildet sind und der zweite Führungsmittelteil eine Mehrzahl von Stiften in paralleler Ausrichtung zu der Bewegungsrichtung des Absperrkörpers umfasst, so dass die Bewegung des Absperrkörpers relativ zu dem Führungsmittel unter gleitendem Zusammenwirken mit dem ersten und zweiten Führungsmittelbereich und das Verschließen der dritten Ventilöffnung durch den Absperrkörper unter abdichtendem Zusammenwirken mit dem dritten Führungsmittelbereich erfolgen kann, wobei der zweite Führungsmittelbereich einen Teil der Oberfläche wenigstens eines der Stifte umfasst, und wobei der erste Führungsmittelteil die erste Ventilöffnung zum Ausüben einer Stellkraft auf den Absperrkörper in Richtung der dritten Ventilöffnung, der zweite Führungsmittelteil die zweite Ventilöffnung und der dritte Führungsmittelteil die dritte Ventilöffnung umfassen.

Im Einzelnen ist das erfindungsgemäße Ventil somit dadurch gekennzeichnet, dass das Führungsmittel und der Absperrkörper jeweils eine Mehrzahl korrespondierender, bzw. geometrisch einander angepasster, Bereiche zum gleitenden Zusammenwirken bei der Hin- und Herbewegung des Absperrkörpers aufweisen. Bevorzugt umfasst das Führungsmittel insgesamt drei Führungsmittelteile unterschiedlicher konstruktiver Ausgestaltung in sequentieller Abfolge und jeweils fester Verbindung, nämlich einen ersten Führungsmittelteil mit einem ersten Führungsmittelbereich, einen zweiten Führungsmittelteil mit einem zweiten Führungsmittelbereich und einen dritten Führungsmittelteil mit einem dritten Führungsmittelbereich. Jeder dieser Führungsmittelbereiche ist dabei in korrespondierender Weise mit dem Absperrkörper so ausgebildet, dass dieser relativ zu dem Führungsmittel zwischen der Offen- und Schließstellung des Ventils entlang seiner Längsausdehnung, bzw. entlang der Ventillängsachse, hin- und herbeweglich ist und dabei jeweils gleitend zumindest mit dem ersten und zweiten Führungsmittelbereich zusammenwirkt. In der Schließstellung des Ventils wirkt der Absperrkörper zudem abdichtend mit dem dritten Führungsmittelbereich zusammen.

Das Führungsmittel umfasst dazu in seinem ersten und dritten Führungsmittelteil bevorzugt jeweils eine Lagerbuchse, in welchen der Absperrkörper mit seinem jeweils korrespondierenden Bereich axial verschieblich gelagert ist; der erste Führungsmittelbereich wird insoweit von der dem Absperrkörper zugewandten Oberfläche der als erstes Führungsmittelteil vorgesehenen Buchse, der dritte Führungsmittelbereich von der entsprechenden Oberfläche der als drittes Führungsmittelteil vorgesehenen Buchse gebildet. Das zweite Führungsmittelteil umfasst eine Mehrzahl von Stiften, vorzugsweise drei Zylinderstifte, die sich zwischen dem ersten und dritten Führungsmittelteil in paralleler Ausrichtung zur Ventillängsachse erstrecken und voneinander, vorzugsweise äquidistant, beabstandet den Absperrkörper umschließen. Jeder Stift ist dabei jeweils fest mit seinem ersten Ende mit dem ersten Führungsmittelteil und mit seinem zweiten Ende mit dem dritten Führungsmittelteil in einer Weise verbunden, dass der zweite Führungsmittelbereich einen Teil der Mantelfläche von wenigstens einem der Stifte umfasst. Handelt es sich bei den Stiften, wie bevorzugt, um Zylinderstifte und bei dem Absperrkörper um einen Rotationskörper, ist somit der zweite Führungsmittelbereich durch eine geeignete Beabstandung der Stifte von dem Absperrkörper bis auf die Berührungslinie zwischen dem wenigstens einen Stift und dem Absperrkörper zu beschränken; erfolgt eine Linienberührung unter Krafteinwirkung, ist die resultierende Druckfläche bekanntermaßen rechteckförmig. Bevorzugt ist es allerdings, dass alle Stifte gleitend mit dem Absperrkörper zusammenwirken, mithin, dass der zweite Führungsmittelbereich die Berührungslinien aller Stifte mit dem Absperrkörper umfasst.

Der erste und der dritte Führungsmittelteil bilden somit zusammen mit dem die Gesamtheit der Stifte umfassenden zweiten Führungsmittelteil eine funktionelle Einheit, mithin das Führungsmittel des Ventils, bzw. dessen Gehäuse mit dem Führungsbereich. Die von dem ersten Führungsmittelteil umfasste erste Ventilöffnung bildet den Steueranschluss des Ventils. Über den Steueranschluss (auch X- bzw. Y-Anschluss genannt) erfolgt die Steuerung des Ventils. Den Einlass (auch P-Anschluss genannt) des Ventils bildet die von dem dritten Führungsmittelteil umfasste dritte Ventilöffnung, während der Auslass (auch A-Anschluss genannt) von der von dem zweiten Führungsmittelteil umfassten zweiten Ventilöffnung gebildet wird. Abhängig von der jeweiligen Verwendung des Ventils, kann die zweite Ventilöffnung aber auch den Einlass und die dritte Ventilöffnung den Auslass bilden. In diesem Fall tritt das Arbeitsfluid durch die zweite Ventilöffnung in das Ventil ein und durch die dritte Ventilöffnung aus dem Ventil aus, während andernfalls der Volumenstrom des Arbeitsfluids durch das Ventil in der Gegenrichtung erfolgt. Bei dem erfindungsgemäßen Ventil sind insoweit zwei alternative Ausführungsformen zu unterschieden.

Der erfindungsgemäße Ventilaufbau ermöglicht gegenüber in üblicher Weise gestalteten vorsteuerbaren Ventilen eine wesentliche Materialeinsparung, indem das Führungsmittel bzw. Gehäuse nicht aus einem Vollmaterial besteht, sondern lediglich zwei ringförmige Buchsen und wenige Stifte umfasst. Eine vorteilhafte Kostenersparnis bei der Herstellung des Ventils ergibt sich jedoch nicht nur aus der Materialeinsparung. Vielmehr ist auch der Bearbeitungsaufwand wesentlich reduziert, da nämlich die wirksame Fläche des gesamten Führungsmittelbereichs, insbesondere durch die Ausbildung des zweiten Führungsmittelbereichs durch wenige Stifte, zum einen verringert ist und zum anderen eine aufwendige Oberflächenbearbeitung der Stifte entfällt, da diese bereits als Halbzeug die erforderliche Oberflächengüte aufweisen. Eine Reduzierung der Herstellkosten für das erfindungsgemäße Ventil ergibt sich aber insbesondere auch daraus, dass infolge der Ausbildung des zweiten Führungsmittelbereichs mit Stiften gleichzeitig mit diesem, und ohne weiteren Bearbeitungsschritt, die zweite Ventilöffnung von den Zwischenräumen zwischen den einzelnen Stiften in dem zweiten Führungsmittelteil gebildet wird. Dieser Aufbau garantiert zudem ein hohes Maß an Wartungsfreundlichkeit, indem das gesamte Führungsmittel im Falle einer Beschädigung in der vorstehend angegebenen Art ohne Weiteres ausgetauscht werden kann. Ist die Beschädigung jedoch nur auf einen der drei Führungsmittelteile beschränkt, so besteht auch die Möglichkeit, durch einen einfachen Austausch nur des beschädigten Teils, sei es der ringförmige erste oder dritte Führungsmittelteil und/oder einer der Stifte des zweiten Führungsmittelteils, das Führungsmittel zu reparieren. Die Wartungsfreundlichkeit des erfindungsgemäßen Ventils geht somit auch in vorteilhafter Weise mit niedrigeren Wartungskosten für ein Fluidsystem mit derartigen Ventilen einher und führt insgesamt zu Einsparungen bei den Betriebskosten solcher Systeme. Schließlich ermöglicht der modulare Aufbau des Führungsmittels aus insgesamt nur drei unterschiedlichen standardisierbaren Komponenten - nämlich aus zwei einfachen ring- bzw. hohlzylinderförmigen Buchsen und wenigen vorgefertigten einfachen Stiften der jeweils selben Art - sowie die einfache Verbindbarkeit dieser Komponenten lediglich über Bohrungen oder entsprechend vorgeformte Ausnehmungen eine effiziente und äußerst kostengünstige Fertigung in hohen Stückzahlen. Die durch eine Massenfertigung erzielbare weitere Kostenersparnis bei der Herstellung des Führungsmittels schließlich bewirkt einen weiteren Kostenvorteil des erfindungsgemäßen Ventils gegenüber Ventilen konventioneller Bauart.

Durch die Realisierung des zweiten Führungsmittelteils mit Stiften und die damit ohne zusätzlichen Fertigungsaufwand einhergehende wesentliche Verringerung der Kontaktfläche zwischen Führungsmittel und Absperrkörper, lassen sich die bei der Ventilbetätigung auftretende Haft- und Gleitreibung auf äußerst kostengünstige Weise deutlich und gezielt reduzieren. Diese Verringerung der Reibungsverluste bewirkt unmittelbar eine verbesserte Schaltzuverlässigkeit und eine Verlängerung der Lebensdauer des erfindungsgemäß aufgebauten Ventils und führt in einem hydraulischen Antriebssystem zu einer Verringerung der Wartungskosten sowie einer Verstetigung der Abtriebsbewegung. Allein durch die bevorzugte Verwendung handelsüblicher Stifte, die in großer Auswahl in nahezu allen für diese Verwendung infrage kommenden Materialien, Oberflächenbeschaffenheiten, Abmessungen und Toleranzen kostengünstig als Halbzeuge zu beziehen sind, und die damit einhergehende wesentliche Materialersparnis bei der Herstellung des Führungsmittels gegenüber konventionellen Führungsbuchsen, liegen zudem - wie bereits vorstehend angegeben - die Herstellkosten des erfindungsgemäßen Steuerventils deutlich unter denen eines konventionellen Ventils. Die Verwendung derartiger Stifte hat zudem den vorteilhaften Effekt, dass die erforderlichen Maßtoleranzen bei dem Führungsmittel im Wesentlichen durch eine exakte Zuordnung von erstem und drittem Führungsmittelteil einhaltbar sind, mithin durch eine exakte Positionierung der Ausnehmungen zur Aufnahme der Stifte in dem jeweiligen Bereich problemlos zu gewährleisten sind.

Der erste und dritte Führungsmittelteil des Führungsmittels sind bevorzugt aus Metall, insbesondere aus Stahl als Dreh- und Bohrteil - im Falle des ersten Führungsmittelteils - und aus Aluminium als Hochdruckgießteil - im Falle des dritten Führungsmittelteils - gefertigt und jeweils mit den Ausnehmungen für die Führungsstifte versehen. Alternativ kann jede der Führungsbuchsen des Ventils jeweils so oder auch aus jedem anderen für Ventile üblicherweise verwendeten Werkstoff, wie insbesondere Messing oder Kunststoff, mittels der dafür jeweils bekannten Herstellverfahren, wie etwa Drehen, Bohren, Fräsen, Gießen, Spritzgießen, Schmieden oder Sintern, insbesondere auch Lasersintern, geformt sein; für bestimmte Einsatzzwecke kann es darüber hinaus auch vorteilhaft sein, wenn zumindest eine der beiden Führungsbuchsen als Sinterteil aus Keramik vorgesehen ist, wobei die Formgebung in diesem Fall mittels Pressen oder Gießen erfolgt. Bevorzugt wird die feste Verbindung zwischen diesen Führungsbuchsen und den Führungsstiften durch Verpressen erzeugt, ohne allerdings äquivalente feste oder lösbare übliche Verbindungsarten, wie etwa Kleben und/oder Verschrauben, zur Herstellung der festen Verbindung zwischen den drei Führungsmittelteilen des Führungsmittels auszuschließen.

Vorteilhafte Ausführungsformen der Erfindung gehen aus den abhängigen Ansprüchen hervor und werden im Folgenden weitergehend erläutert.

Insbesondere im Hinblick auf eine einfache und wirtschaftliche Montage des erfindungsgemäßen Ventils, ist die Öffnung des Führungsmittels zum Zusammenwirken mit dem Absperrkörper und dem Haltemittel entsprechend der Abfolge der Führungsmittelbereiche gestaltet, und zwar in der Form, dass der Innendurchmesser des Führungsmittels, bzw. dessen wirksame Öffnungsweite, vom ersten über den zweiten zum dritten Führungsmittelteil abnimmt, so dass die Öffnung des Führungsmittels im ersten Führungsmittelteil größer als im zweiten Führungsmittelteil und im zweiten Führungsmittelteil größer als im dritten Führungsmittelteil ist. Alternativ kann die Öffnungsweite auch in entsprechender Weise vom ersten über den zweiten zum dritten Führungsmittelteil zunehmen. Die Ventilfunktion ist dabei insoweit sichergestellt, als auch der Absperrkörper mit entsprechenden korrespondierenden Absperrkörperbereichen ausgebildet ist, der Absperrkörper also einen ersten, zweiten und dritten Absperrkörperbereich umfasst, dessen jeweiliger wirksamer Außendurchmesser an den entsprechenden ersten, zweiten und dritten Führungsmittelteil angepasst ist. Die Ventilmontage, bzw. das Einsetzen des Absperrkörpers und Haltemittels in das Führungsmittel, ist damit jeweils von dem Führungsmittelteil mit der größten Öffnungsweite her möglich. Die relative Beweglichkeit des Absperrkörpers zwischen der Offen- und Schließstellung des Ventils in Bezug auf das Führungsmittel wird auf diese Weise von dem dritten bzw. ersten Führungsmittelteil begrenzt.

Von Vorteil und besonders bevorzugt ist es, den dritten Führungsmittelteil in seinem an den zweiten Führungsmittelteil angrenzenden Bereich mit einer Mehrzahl von Ausnehmungen auszubilden. Diese Ausnehmungen sind relativ zur Ventillängsachse orientiert und können sich in Schließrichtung des Ventils verjüngen. Beispielsweise sind diese Ausnehmungen U-förmig, V-förmig und/oder Y-förmig gestaltet. Ergänzend oder alternativ dazu ist es bevorzugt, den dritten Führungsmittelteil in seinem an den zweiten Führungsmittelteil angrenzenden Bereich mit einer Fase auszubilden, so dass sich der dritte Führungsmittelbereich in Schließrichtung des Ventils trichterförmig verjüngt. Durch diese Ausnehmungen und/oder die Fase innerhalb des dritten Führungsmittelteils in seinem an den zweiten Führungsmittelteil angrenzenden Bereich wird eine stetige Änderung der effektiven Fläche der dritten Ventilöffnung bei der Bewegung des Absperrkörpers innerhalb des dritten Führungsmittelteils ermöglicht. Mit dem erfindungsgemäßen Ventil lässt sich auf diese Weise eine weitestgehende Verstetigung der Strömungsverhältnisse bei seiner Betätigung erzielen, was sich wiederum in einem hydraulischen Antriebssystem gleichermaßen vorteilhaft auf die Stetigkeit der Abtriebsbewegung des hydraulischen Antriebs auswirkt. Darüber hinaus bewirkt diese bevorzugte Ausbildung des dritten Führungsmittelteils des erfindungsgemäßen Ventils eine Reduzierung der Strömungsgeräusche im Ventilbetrieb und kann somit wirksam zu einer Geräuschminderung innerhalb eines Fluidsystems beitragen. Entsprechend des jeweils für die Herstellung des dritten Führungsmittelteils verwendeten Werkstoffs, sind die Ausnehmungen insbesondere durch Fräsen, Schmieden, Gießen, Pressen oder Spritzgießen ausgeformt.

Hinsichtlich einer einfacheren und kostengünstigeren Herstellung und Wartung des Ventils ist es weiterhin bevorzugt, den Dichtbereich des Ventils in seiner Schließstellung, genauer den dritten Führungsmittelteil in seiner dem zweiten Führungsmittelteil abgewandten Stirnseite, als zunächst separat hergestellten ringförmigen, vorzugsweise selbstpositionierenden, Dichteinsatz bereitzustellen und diesen im Zuge der Ventilmontage mit dem dritten Führungsmittelteil, vorzugsweise mittels eines O-Rings, zu verbinden, so dass der ringförmige Dichteinsatz und der dritte Führungsmittelteil eine bauliche Einheit bilden. Der ringförmige Dichteinsatz ist zum Zusammenwirken mit dem korrespondierenden dritten Absperrkörperbereich des Absperrkörpers dabei derart gestaltet, dass er den dritten Absperrkörperbereich lediglich in der Schließstellung des Ventils entlang einer die Ventilöffnung umschließenden, vorzugsweise kreisförmigen, Kontaktlinie dichtend berührt. Somit dient der dritte Führungsmittelbereich nicht wie der erste und zweite Führungsmittelbereich des Führungsmittels dazu, den Absperrkörper beim Hin- und Herbewegen zwischen der Schließ- und Offenstellung des Ventils unmittelbar zu führen, sondern dazu, mittelbar über den innerhalb des dritten Führungsmittelbereichs angeordneten und somit von diesem umfassten ringförmigen Dichteinsatz ein zuverlässiges Schließen des Ventils im Zusammenwirken mit dem dritten Absperrkörperbereich des Absperrkörpers sicherzustellen.

In einer bevorzugten Ausführungsform des erfindungsgemäßen Ventils ist der Absperrkörper einteilig mit dem ersten, zweiten und dritten Absperrkörperbereich ausgebildet und in dem Führungsmittel mit dem jeweils korrespondierenden ersten, zweiten und dritten Führungsmittelteil verschieblich angeordnet. Das Haltemittel, welches vorzugsweise in Form einer Feder, insbesondere einer zylindrischen Druckfeder, vorliegt, wirkt dabei an einem Ende mit der der ersten Ventilöffnung zugewandten stirnseitigen Außenfläche des Absperrkörpers zusammen. Besonders platzsparend ist die alternative Anordnung der Druckfeder entlang der Innenfläche einer Ausnehmung, welche sich in axialer Richtung von der der ersten Ventilöffnung zugewandten stirnseitigen Außenfläche des Absperrkörpers weg in dem Absperrkörper erstreckt. Das eine Ende der insoweit geführten Feder wirkt dabei mit dieser Innenfläche zusammen. Das andere Ende der Druckfeder ragt dabei aus der Ausnehmung heraus. In beiden Fällen ragt die Druckfeder mehr oder weniger weit in den ersten Führungsmittelteil hinein, so dass der Absperrkörper mittels dieser über die erste Ventilöffnung in Richtung der zweiten Ventilöffnung vorspannbar ist. Für eine definierte Einleitung der Federkraft in den Absperrkörper weist der erste Absperrkörperbereich somit bevorzugt eine Sackbohrung auf, welche die Druckfeder entlang der Ventillängsachse führt. Bei der alternativen Befestigung der Druckfeder ist eine definierte Zuordnung zwischen den beiden Komponenten vorzugsweise durch geeignete Vorsprünge auf der Absperrkörperstirnseite sichergestellt.

Nach einer weiteren bevorzugten Ausführungsform des erfindungsgemäßen Ventils ist der Absperrkörper zweiteilig in Form eines ersten und zweiten Absperrkörperteils ausgebildet. Dabei umfasst das erste Absperrkörperteil den ersten und einen zusätzlichen vierten Absperrkörperbereich und das zweite Absperrkörperteil den zweiten und dritten sowie einen zusätzlichen fünften Absperrkörperbereich. Der vierte und der fünfte Absperrkörperbereich sind in einer Weise verschieblich ineinandergreifend gelagert, dass die Länge des Absperrkörpers veränderlich ist. Mit anderen Worten: Das erste und zweite Absperrkörperteil sind gegeneinander verschieblich gelagert, so dass die Gesamtlänge des Absperrkörpers veränderbar ist, was wiederum durch ein Ineinanderschieben des vierten in den fünften Absperrkörperbereich, oder umgekehrt, ermöglicht wird. Hierbei wirkt das Haltemittel, vorzugsweise in Form einer Feder, insbesondere einer zylindrischen Druckfeder, mit dem Absperrkörper in der Weise zusammen, dass die Haltekraft des Haltemittels, bzw. dessen Federkraft, einerseits auf das zweite Teil des Absperrkörpers über dessen dritten Absperrkörperbereich und andererseits auf das erste Teil des Absperrkörpers über dessen ersten Absperrkörperbereich übertragbar ist, und zwar so, dass einerseits eine Verringerung der Länge des Absperrkörpers durch eine Bewegung des ersten Absperrkörperteils, des zweiten Absperrkörperteils oder jedes der beiden Absperrkörperteile relativ zueinander erfolgt, andererseits beide Absperrkörperteile relativ zu dem Führungsmittel bei konstanter Länge des Absperrkörpers entgegen der Haltekraft des Haltemittels bewegbar sind. Wird das erste Absperrkörperteil in der Schließstellung des Ventils, in der das zweite Absperrkörperteil mit seinem dritten Absperrkörperbereich den dritten Führungsmittelbereich des dritten Führungsmittelteils dichtend berührt, mit einer Stellkraft in Richtung des zweiten Absperrkörperteils und entgegen der Haltekraft des Haltemittels beaufschlagt, resultiert daraus eine der Stellkraft proportionale Verringerung der Länge des Absperrkörpers. Die maximale Verstellbarkeit, und mithin die minimale Länge des Absperrkörpers, ist somit dann erreicht, wenn beide Absperrkörperteile aneinander anliegen; beträgt der Überlappungsgrad des vierten Absperrkörperbereichs des ersten Absperrkörperteils und des fünften Absperrkörperbereichs des zweiten Absperrkörperteils in der Ruhestellung des Haltemittels 50 %, ergibt sich daraus folglich als maximale Verstellbarkeit die halbe Eindringtiefe des vierten in den fünften Absperrkörperbereichs, oder umgekehrt.

Die Druckfeder ist derart ausgelegt, dass die Länge des Absperrkörpers in der Ruhestellung der Druckfeder durch eine an der der ersten Ventilöffnung zugewandten stirnseitigen Außenfläche des ersten Absperrkörperteils in Richtung der zweiten Ventilöffnung und/oder eine an der der zweiten Ventilöffnung zugewandten stirnseitigen Außenfläche des zweiten Absperrkörperteils in Richtung der ersten Ventilöffnung, jeweils entgegen der Haltekraft der Druckfeder, wirkende Stellkraft verringerbar ist. Dazu kann die Druckfeder auf zwei gleichermaßen bevorzugte Arten mit den beiden Absperrkörperteilen zusammenwirken. Nach der ersten Alternative ist die Druckfeder um die beiden ineinandergreifenden Absperrkörperbereiche der ersten und zweiten Absperrkörperteile des Absperrkörpers herum angeordnet, und zwar so, dass sie an einem Ende an der Außenfläche des ersten Absperrkörperteils, an dem dem ersten Absperrkörperbereich zugewandten Ende des vierten Absperrkörperbereichs, und am anderen Ende an der Außenfläche des zweiten Absperrkörperteils, an dem dem zweiten Absperrkörperbereich zugewandten Ende des fünften Absperrkörperbereichs, befestigt ist. Nach der zweiten Alternative ist die Druckfeder in dem von den beiden Absperrkörperteilen eingeschlossenen Hohlraum vorgesehen, so dass sie an einem Ende mit der Innenfläche des ersten Absperrkörperteils und am anderen Ende mit der Innenfläche des zweiten Absperrkörperteils zusammenwirkt; diese Innenflächen sind von der jeweiligen Ausnehmung des ersten und zweiten Absperrkörperteils umfasst. Bei beiden Alternativen ist somit gewährleistet, dass der Absperrkörper mittels der Druckfeder über die erste Ventilöffnung in Richtung der zweiten Ventilöffnung vorspannbar ist. Wenngleich es bevorzugt ist, den Absperrkörper entweder einteilig oder zweiteilig in der vorstehend angegebenen Weise auszubilden, kann es insbesondere in Anwendungen, bei denen kleine Ventilabmessungen bei gleichermaßen großen Stellwegen des Absperrkörpers erforderlich sind, von Vorteil sein, einen Absperrkörper aus mehr als zwei Absperrkörperteilen vorzusehen. Derartige Absperrkörperausführungen mit einem der zweiteiligen Ausführung entsprechenden teleskopartigen Aufbau aus mehr als zwei Absperrkörperteilen sind daher ausdrücklich als weitere besondere Ausführungsformen des Ventils gemäß Anspruch 1 von der Erfindung mitumfasst.

Unabhängig von der jeweiligen Form, ist der Absperrkörper bevorzugt aus Metall, insbesondere aus Stahl, Messing oder Aluminium, oder aus einem für diese Anwendung geeigneten nicht-metallischen Werkstoff, insbesondere aus Kunststoff oder Keramik, unter Anwendung der jeweils bekannten Bearbeitungsverfahren, wie Drehen, Bohren, Fräsen, Gießen, Pressen, Schmieden, Sintern, insbesondere auch Lasersintern, oder Spritzgießen, hergestellt. Die von dem zweiten Führungsmittelteil umfassten Stifte sind bevorzugt als Stahlstifte in üblicher Weise als Stangenmaterial vorgefertigt. Besonders vorteilhaft ist es diesbezüglich, die Stifte als Halbzeuge bereits mit der erforderlichen Oberflächenqualität und in der gewünschten Länge bereitzustellen, so dass diese ohne weiteren Bearbeitungsschritt direkt durch Einpressen mit jeweils einem Ende in die dafür vorgesehenen Ausnehmungen in dem ersten Führungsmittelteil und mit jeweils dem anderen Ende in die dafür vorgesehenen Ausnehmungen in dem dritten Führungsmittelteil verbindbar sind. Die Stifte und die Ausnehmungen sind zu diesem Zweck bevorzugt so dimensioniert, dass jedenfalls eine Pressverbindung mit hinreichender Festigkeit gewährleistet ist.

Die Ausführungsform des erfindungsgemäßen Ventils mit einem zweiteiligen Absperrkörper ist in besonderer Weise geeignet, in einer Steuereinrichtung für einen hydraulischen Antrieb den Volumenstrom des Arbeitsfluids von einem Vorratsbehälter zu dem hydraulischen Antrieb im Bypass zu steuern. In einem derartigen Antriebssystem hat das Ventil in dieser Ausführungsform den zusätzlichen wesentlichen Vorteil, dass es eine selbsttätige Arbeitspunkteinstellung bei wechselnden Betriebsbedingungen, wie Last- und/oder Temperaturschwankungen innerhalb des hydraulischen Antriebssystems, ermöglicht, wodurch sich eine entsprechende Einstellung des Umlauf- bzw. Vorsteuerdrucks des Arbeitsfluids in dem hydraulischen System erübrigt.

Bei einer weiteren besonderen Ausführungsform des erfindungsgemäßen Ventils weist der Absperrkörper an seinem dem dritten Führungsmittelteil zugeordneten Ende einen stempelförmigen Vorsprung auf. Dieser stempelförmige Vorsprung ist so gestaltet, dass er für einen aus dem Ventil austretenden Volumenstrom des Arbeitsfluids in der Art einer Prallplatte wirken kann, also den aus der dritten Ventilöffnung austretenden Volumenstrom des Arbeitsfluids dämpft. Durch die feste Verbindung des stempelförmigen Vorsprungs mit dem Absperrkörper wirkt die bei der Dämpfung freiwerdende Bewegungsenergie des Arbeitsfluids als Stellkraft auf den Absperrkörper zurück, welcher somit durch den Volumenstrom des Arbeitsfluids in seine Schließstellung bewegbar ist; die bei der Dämpfung erzeugte Stellkraft wirkt insoweit in dieselbe Richtung wie die Haltekraft des Haltemittels, durch das der Absperrkörper in seiner Schließstellung haltbar ist. Diese Ausführungsform des erfindungsgemäßen Ventils hat den Vorteil einer noch stetigeren Steuerbarkeit des Volumenstroms des Arbeitsfluids. Zu dem angegebenen Zweck kann der stempelförmige Vorsprung gleichermaßen vorteilhaft sowohl an einem einteiligen wie auch an einem mehrteiligen Absperrkörper ausgebildet sein.

Das erfindungsgemäße Ventil ist somit prinzipiell in allen druckmittelbetriebenen technischen Einrichtungen verwendbar. Wegen seiner besonderen funktionellen Vorzüge und des aufgrund seiner Massenfertigungstauglichkeit sowie seiner Wartungsfreundlichkeit möglichen Kosteneinsparpotentials, ist das erfindungsgemäße Ventil insbesondere für eine Verwendung in Bereichen wie dem Maschinenbau, der Fahrzeugtechnik, der Automobilindustrie, der Verfahrenstechnik, der Versorgungstechnik und der Gebäudeautomatisierung geeignet.

Die Erfindung betrifft auch ein Verfahren zur Herstellung eines erfindungsgemäßen Ventils zum Steuern eines Volumenstroms eines Arbeitsfluids in einem Strömungspfad, das eine erste Ventilöffnung - den Steueranschluss des Ventils -, eine zweite und eine dritte Ventilöffnung - den Ventilauslass und den Ventileinlass oder den Ventileinlass und den Ventilauslass -, einen wenigstens einteiligen Absperrkörper, der zwischen einer Offenstellung, in welcher die dritte Ventilöffnung zum Ermöglichen eines Volumenstroms des Arbeitsfluids zwischen der zweiten und dritten Ventilöffnung geöffnet ist, und einer Schließstellung, in welcher die dritte Ventilöffnung durch den Absperrkörper verschlossen ist, beweglich ist, ein Führungsmittel zum Führen des Absperrkörpers zwischen der Offen- und der Schließstellung und ein Haltemittel zum Ausüben einer Haltekraft auf den Absperrkörper in der Schließstellung aufweist.

Dieses Verfahren umfasst die folgenden Schritte, wobei die Abfolge der einzelnen Verfahrensschritte auch von der nachfolgend angegebene Reihenfolge abweichen kann: (1) Bereitstellen des Absperrkörpers zum gleitenden Zusammenwirken mit dem Führungsmittel; (2) Bereitstellen eines ersten Führungsmittelteils mit einem ersten Führungsmittelbereich zum Umschließen des Absperrkörpers und gleitenden Zusammenwirken mit diesem sowie zum Ausbilden der ersten Ventilöffnung; (3) Bereitstellen eines dritten Führungsmittelteils mit einem dritten Führungsmittelbereich zum Umschließen des Absperrkörpers und gleitenden Zusammenwirken mit diesem sowie zum Ausbilden der dritten Ventilöffnung; (4) Bereitstellen einer Mehrzahl von Stiften zum Ausbilden eines zweiten Führungsmittelteils mit einem zweiten Führungsmittelbereich zum gleitenden Zusammenwirken mit dem Absperrkörper sowie zum Ausbilden der zweiten Ventilöffnung; (5) Herstellen einer Verbindung zwischen einem Ende jedes Stifts und dem ersten Führungsmittelteil sowie zwischen dem anderen Ende jedes Stifts und dem dritten Führungsmittelteil unter paralleler Ausrichtung jedes Stifts zu der Bewegungsrichtung des Absperrkörpers, so dass zwischen dem ersten und dritten Führungsmittelteil der zweite Führungsmittelteil mit der zweiten Ventilöffnung, an dem freien Ende des ersten Führungsmittelteils die erste Ventilöffnung, an dem freien Ende des dritten Führungsmittelteils die dritte Ventilöffnung und aus dem ersten, zweiten und dritten Führungsmittelteil in aufeinanderfolgender Anordnung und in fester Verbindung das Führungsmittel zum Führen des Absperrkörpers gebildet werden; (6) Bereitstellen des Haltemittels zum Ausüben der Haltekraft auf den Absperrkörper in der Schließstellung; (7) Anordnen des Haltemittels an dem Absperrkörper, so dass die Haltekraft des Haltemittels in Richtung der Schließstellung des Absperrkörpers wirkt; (8) Anordnen des Absperrkörpers und des Haltemittels in dem Führungsmittel, so dass die Bewegung des Absperrkörpers relativ zu dem Führungsmittel unter gleitendem Zusammenwirken mit dem ersten Führungsmittelbereich und einem Teil der Oberfläche wenigstens eines der Stifte des zweiten Führungsmittelbereichs sowie das Verschließen der dritten Ventilöffnung durch den Absperrkörper unter abdichtendem Zusammenwirken mit dem dritten Führungsmittelbereich und unter Wirkung der Haltekraft des Haltemittels erfolgen.

Das mit dem erfindungsgemäßen Verfahren erzeugbare Ventil weist somit alle Merkmale des Ventils gemäß Anspruch 1 auf, das im Einzelnen vorstehend mit seinen Komponenten und besonderen Ausführungsformen nach den abhängigen Ansprüchen, jeweils unter Einbeziehung der wesentlichen Aspekte der Herstellung, erläutert wurde. Insoweit sind diese Angaben auch im Hinblick auf das beanspruchte Herstellverfahren heranzuziehen. Weitere Einzelheiten zur Herstellung des erfindungsgemäßen Ventils gehen aus der Beschreibung der in den Figuren dargestellten vorteilhaften Ausführungsbeispiele hervor.

Ein weiterer Gegenstand der Erfindung ist schließlich eine Vorrichtung mit dem erfindungsgemäßen Ventil zum lastdruckkompensierten Steuern eines Volumenstroms eines Arbeitsfluids von einer zweiten in eine erste Richtung in einem Strömungspfad entgegen einem in der zweiten Richtung in dem Strömungspfad wirkenden zeitlich veränderlichen Lastdruck. Diese Vorrichtung ist dadurch gekennzeichnet, dass sie ein Ventil gemäß Anspruch 7, ein Drosselelement, ein Rückschlagventil, ein hydromechanisches Übertragungsmittel, einen ersten Arbeitsfluidanschluss zum Herstellen einer Strömungsverbindung mit dem Strömungspfad zum Leiten des Volumenstroms des Arbeitsfluids in die erste Richtung, sowie einen zweiten und dritten Arbeitsfluidanschluss zum jeweiligen Herstellen einer Strömungsverbindung mit dem Strömungspfad zum Leiten des Volumenstroms des Arbeitsfluids in die zweite Richtung, eine Strömungsverbindung zwischen jeweils dem ersten Arbeitsfluidanschluss und dem dritten Arbeitsfluidanschluss sowie der ersten Ventilöffnung umfasst und weiterhin jeweils eine Strömungsverbindung zwischen der dritten Ventilöffnung und dem ersten Arbeitsfluidanschluss, zwischen der zweiten Ventilöffnung und dem zweiten Arbeitsfluidanschluss sowie zwischen der ersten Ventilöffnung und dem dritten Arbeitsfluidanschluss vorgesehen ist, wobei die Strömungsverbindung zwischen der ersten Ventilöffnung und dem dritten Arbeitsfluidanschluss in paralleler Anordnung das Drosselelement zur Dämpfung des Volumenstroms des Arbeitsfluids von der ersten Ventilöffnung, das Rückschlagventil zum Leiten des Arbeitsfluids zu der ersten Ventilöffnung und die Strömungsverbindung zwischen der ersten Ventilöffnung und dem ersten Arbeitsfluidanschluss das hydromechanische Übertragungsmittel zum mechanischen Bewegen des Absperrkörpers an der ersten Ventilöffnung umfassen, so dass, bei einem Volumenstrom des Arbeitsfluids in dem Strömungspfad in der ersten Richtung, eine Erhöhung des Arbeitsfluiddrucks an dem ersten Arbeitsfluidanschluss eine Vorpositionierung des Absperrkörpers des Ventils an der ersten Ventilöffnung durch das hydromechanische Übertragungsmittel in Richtung seiner Schließstellung, unter Nachströmen des Arbeitsfluids über die Strömungsverbindung zwischen dem ersten und dritten Arbeitsfluidanschluss und über das Rückschlagventil zu der ersten Ventilöffnung, und eine Erhöhung des Arbeitsfluiddrucks an dem dritten Arbeitsfluidanschluss eine Bewegung des vorpositionierten Absperrkörpers in seine Schließstellung zum Steuern des Volumenstroms des Arbeitsfluids in dem Strömungspfad von der zweiten in die erste Richtung ermöglichen.

Die von der erfindungsgemäßen Vorrichtung ermöglichte Steuerungsfunktion beruht somit wesentlich auf dem Ventil nach Anspruch 1 in der besonderen Ausführungsform mit einem zweiteiligen Absperrkörper gemäß Anspruch 7. Ohne die Beschaltung, wie sie die Vorrichtung vorsieht, ermöglicht dieses Ventil in einem Fluidsystem generell eine Steuerung eines Volumenstroms des Arbeitsfluids zwischen einem Bypassbetrieb, in dem der Volumenstrom des Arbeitsfluids durch das Ventil von einem Verbraucher wegleitbar ist, und einem Arbeitsbetrieb, in dem das Ventil aufgrund des Anliegens eines geeigneten Vorsteuerdrucksignals an seinem Steueranschluss geschlossen ist und dadurch der Volumenstrom des Arbeitsfluids zu dem Verbraucher führbar ist. Damit erlaubt dieses Ventil einen gesteuerten Betrieb eines Verbrauchers in einem Fluidsystem ohne Richtungsumkehr und ohne Unterbrechung eines von einem Volumenstromerzeugungsmittel, beispielsweise einer motorbetriebenen Pumpe, in einem Strömungspfad in einer Richtung kontinuierlich erzeugten Volumenstroms eines Arbeitsfluids, also eine Umleitung des Volumenstroms des Arbeitsfluids in einem Strömungspfad von der ersten Richtung in die Gegenrichtung bzw. zweite Richtung. Die Haltekraft des Haltemittels des Ventils ist dafür an den in dem Strömungspfad herrschenden Arbeitsfluiddruck so angepasst, dass bereits ein minimaler Arbeitsfluiddruck am Ventileinlass ausreicht, um den Absperrkörper, genauer dessen zweites Absperrkörperteil, aus seiner Schließin seine Offenstellung zu bewegen; das Ventil kann somit öffnen, sobald ein Sperrdruck entgegen einem in dem Strömungspfad in der ersten Richtung geführten Volumenstrom des Arbeitsfluids einen definierten Wert erreicht.

Um das Ventil im Betriebszustand des Fluidsystems zu schließen - wenn also das Volumenstromerzeugungsmittel in Betrieb ist -, muss ein geeignetes Drucksignal an dem Steueranschluss des Ventils bzw. an dessen erster Ventilöffnung anliegen, durch das der zweiteilige Absperrkörper aus seiner Offen- in seine Schließstellung bewegbar ist. Ein derartiges Steuersignal kann grundsätzlich auf unterschiedlichste Weise erzeugt werden, etwa durch einen geeigneten Volumenstrom eines Arbeitsfluids, genauso wie durch eine direkte oder indirekte mechanische, elektrische oder manuelle Betätigung des ersten Absperrkörperteils des Absperrkörpers des Ventils. Der Steueranschluss des Ventils weist dazu neben einer Strömungsverbindung mit dem ersten Arbeitsfluidanschluss eine weitere Strömungsverbindung mit dem dritten Arbeitsfluidanschluss auf, der eine jeweils entsprechende Beschaltung ermöglicht. Vorteilhaft ist es, diese Beschaltung als steuerbare Strömungsverbindung zum Leiten des über den dritten Arbeitsfluidanschluss aus der Vorrichtung austretenden Arbeitsfluids auszubilden. Auf diese Weise kann die Vorsteuerung lediglich durch ein Öffnen und Schließen eines in dieser Strömungsverbindung, etwa zu einem Vorratsbehälter, vorzusehenden geeigneten Schaltelements, beispielsweise eines manuell oder elektromechanisch steuerbaren Drosselelements, erfolgen. Im Einzelnen bewirkt ein Schließen eines derartigen Drosselelements in einer an den dritten Arbeitsfluidanschluss angeschlossenen Strömungsverbindung eine Stellbewegung des Absperrkörpers des von der Vorrichtung umfassten Ventils aus seiner Offen- in seine Schließstellung. Dies hat zur Folge, dass das Arbeitsfluid in dem mit dem ersten Arbeitsfluidanschluss verbundenen Strömungspfad zwischen dem Vorratsbehälter und dem Verbraucher den in der zweiten Richtung wirkenden Sperrdruck überwinden kann und ein Volumenstrom des Arbeitsfluids in dem Strömungspfad in der ersten Richtung zu dem Verbraucher einsetzt, mithin dieser durch das Arbeitsfluid angetrieben wird.

Beim Betrieb eines Fluidsystems mit der erfindungsgemäßen Vorrichtung und beispielsweise einem Verbraucher in Form eines Hydraulikzylinders bzw. eines Hydromotors, erzeugt die an dem Kolben des Hydraulikzylinders bzw. an der Welle des Hydromotors angreifende Abtriebslast einen Gegendruck auf das Arbeitsfluid in dem Strömungspfad, der insoweit in der Gegenrichtung des Volumenstroms des Arbeitsfluids, bzw. in der zweiten Richtung, wirkt. Dieser Gegendruck muss auch von der erfindungsgemäßen Vorrichtung, genauer dem Absperrkörper des von dieser umfassten Ventils bei seiner Bewegung in die Schließstellung überwunden werden; der Lastdruck ist in der Regel zeitlich veränderbar und kann zwischen Null und dem für den jeweiligen Antrieb zulässigen maximalen Grenzlastdruck schwanken. Im Falle eines in dem Strömungspfad, wie üblich, mit konstantem Druck bereitgestellten Arbeitsfluids machen sich derartige Lastdruckschwankungen insoweit negativ bemerkbar, als sie dem Volumenstrom des Arbeitsfluids in dem Strömungspfad in der ersten Richtung und mithin dem Absperrkörper des Ventils bei seiner Schließbewegung entgegenwirken, wodurch sich das Schließen des Ventils je nach Abtriebslast verzögert. Folglich ergibt sich bei jeder Inbetriebnahme eines Verbrauchers in einem Fluidsystem eine von der jeweiligen Abtriebslast abhängige Totzeit, bzw. Schaltverzögerung; die Totzeit ist hierbei als Zeitdauer definiert, die zwischen dem Ansteuersignal für die Inbetriebnahme des Verbrauchers und dem Beginn seiner Abtriebsbewegung vergeht. Bezogen auf die erfindungsgemäße Vorrichtung ist unter Totzeit, bzw. Schaltverzögerung, somit die Zeitdauer zwischen einer Erhöhung des Arbeitsfluiddrucks an dem dritten Arbeitsfluidanschluss zum Bewegen des Absperrkörpers des Ventils in seine Schließstellung und dem Einsetzen des Arbeitsfluidflusses zu dem Verbraucher zu verstehen. Der Schließvorgang des Ventils entspricht also dem Umschalten der Vorrichtung von dem Bypassbetrieb in den Arbeitsbetrieb.

Die sich stellende Teilaufgabe ist es somit, eine Vorrichtung anzugeben, die diesen Nachteil überwindet, die also in einem Fluidsystem mit einem Verbraucher ein jeweils weitestgehend lastunabhängiges und totzeitfreies Umschalten von einem Bypassbetrieb in einen Arbeitsbetrieb des Verbrauchers ermöglicht. Diese Teilaufgabe wird durch die vorstehend angegebene Vorrichtung unter Verwendung des erfindungsgemäßen Ventils gelöst. Diese Vorrichtung ermöglicht das Schalten bzw. Freigeben eines, beispielsweise mittels einer motorbetriebenen Pumpe erzeugten, Volumenstroms eines Arbeitsfluids in einem Strömungspfad eines Fluidsystems in der ersten Richtung, beispielsweise von einem Vorratsbehälter zu einem Verbraucher, nahezu verzögerungsfrei und im Wesentlichen unabhängig von der jeweiligen Abtriebslast des Verbrauchers, also mit nur minimaler und lastunabhängiger Totzeit und ist prinzipiell in allen Fluidsystemen mit druckmittelbetriebenen Verbrauchern bzw. Stellorganen einsetzbar. Durch eine geeignete Auslegung der einzelnen Komponenten der erfindungsgemäßen Vorrichtung in Bezug auf den in dem jeweiligen Strömungspfad auftretenden Maximaldruck ist jedenfalls sicherzustellen, dass die Lastdruckkompensation und Verkürzung der Schaltverzögerung beim Umschalten von dem Bypass- in den Arbeitsbetrieb innerhalb der jeweiligen Parametergrenzen zuverlässig erfüllt werden. Im Einzelnen beinhaltet dies eine geeignete Anpassung der Geometrie der einzelnen Vorrichtungskomponenten sowie der jeweiligen Halte- und Stellkräfte an die jeweils zu schaltenden Volumenströme.

Von Vorteil ist insbesondere die Auslegung des Ventils im Hinblick auf einen möglichst großen Stellbereich des Absperrkörpers, bzw. auf eine relativ große Beweglichkeit der beiden Absperrkörperteile des Absperrkörpers zueinander, um einen möglichst großen Arbeitsfluiddruckbereich, bzw. Abtriebslastbereich des Verbrauchers in einem Fluidsystem, abzudecken sowie im Hinblick auf die Kompensation transienter Lastdruckspitzen bei maximaler Abtriebslast des Verbrauchers in dem Fluidsystem. Während Ersteres durch eine geeignete geometrische Festlegung des Überlappungsbereichs der beiden teleskopartig zusammenwirkenden Absperrkörperteile und gegebenenfalls durch die Verwendung zusätzlicher Absperrkörperteile in der oben angegebenen Weise sicherzustellen ist, erfordert Letzteres zusätzlich eine geeignete Auslegung des Haltemittels des von der Vorrichtung umfassten Ventils, so dass auch im Arbeitsbetrieb des mit der Vorrichtung verbundenen Verbrauchers stets ein Teil des Volumenstroms des Arbeitsfluids über das Bypass-Ventil im Kreis führbar ist; dieser insoweit kontinuierliche Bypassbetrieb entspricht einer weiteren Vergrößerung des Absperrkörper-Stellbereichs, da bei dieser Ventilauslegung ein vollständiges Schließen des Ventils nur im Falle von an dem ersten Arbeitsfluidanschluss der Vorrichtung auftretenden dynamischen Lastdruckspitzen bei bereits maximal zulässiger Abtriebslast erfolgt, um diese zu kompensieren.

Die Vorrichtung umfasst damit die folgenden Komponenten, deren Zusammenwirken im Einzelnen nunmehr weitergehend erläutert wird:
Wie oben bereits angegeben, ist das Ventil mit zweiteiligem Absperrkörper mit seiner dritten Ventilöffnung - dem Einlass - über den ersten Arbeitsfluidanschluss mit dem Strömungspfad zum Leiten des Volumenstroms des Arbeitsfluids in die erste Richtung verbindbar, so dass das über den ersten Arbeitsfluidanschluss in die Vorrichtung eintretende Arbeitsfluid einerseits durch das Ventil von der dritten zu der zweiten Ventilöffnung - dem Auslass - und von dort weiter zu dem zweiten Arbeitsfluidanschluss strömen kann, andererseits aber gleichzeitig über die zwischen dem ersten und dritten Arbeitsfluidanschluss vorgesehene Strömungsverbindung und das Rückschlagventil nahezu ungehindert zu der ersten Ventilöffnung gelangen kann. Damit ist sichergestellt, dass bei einer Bewegung des Absperrkörpers aus der Offen- in die Schließstellung Arbeitsfluid zu der ersten Ventilöffnung - dem Steueranschluss - nachströmen kann, so dass eine Unterdruckbildung im Bereich der ersten Ventilöffnung jedenfalls zuverlässig vermeidbar ist; ein schlagartiges Schließen des Ventils wird durch den in der Gegenrichtung auf den Absperrkörper an der dritten Ventilöffnung wirkenden Arbeitsfluiddruck verhindert. Bewegt sich dagegen der Absperrkörper des Ventils aus der Schließstellung in die Offenstellung, kann das Arbeitsfluid nur durch das Drosselelement von der ersten Ventilöffnung wegströmen, so dass durch das Drosselelement ein schlagartiges Öffnen des Ventils vermieden werden kann; das Drosselelement stellt somit insbesondere auch sicher, dass keine unerwünschten Druckschwankungen und/oder Schwingungen im Arbeitsfluid durch die Verwendung der Vorrichtung in einem damit verbundenen Fluidsystem auftreten. Durch das Rückschlagventil und das Drosselelement sowie die Strömungsverbindung zwischen dem ersten und dritten Arbeitsfluidanschluss ist insoweit jedenfalls ein definiertes Öffnen und Schließen des Ventils, und mithin ein definiertes Umschalten der erfindungsgemäßen Vorrichtung von dem Bypassbetrieb in den Arbeitsbetrieb eines damit verbundenen Verbrauchers, gewährleistet.

Wie bereits angegeben, ist die erfindungsgemäße Vorrichtung über den dritten Arbeitsfluidanschluss vorsteuerbar, indem dieser, etwa mittels einer Strömungsverbindung mit einem Vorratsbehälter verbunden wird und diese Verbindung durch ein geeignetes Steuerelement zwischen einer Offen- und einer Schließstellung hin- und hergeschaltet wird; über den dritten Arbeitsfluidanschluss wird somit die Vorsteuerung des von der Vorrichtung umfassten Ventils bewirkt, was wiederum über den ersten und zweiten Arbeitsfluidanschluss die Steuerung des Volumenstroms in einem damit verbundenen Strömungspfad ermöglicht. Solange bei einer derartigen Beschaltung das Steuerelement geöffnet ist, kann das Arbeitsfluid also direkt in den Vorratsbehälter zurückströmen, ohne eine Stellkraft auf den Absperrkörper an der ersten Ventilöffnung auszuüben. Der Absperrkörper, genauer dessen erstes Absperrkörperteil, wird in diesem Fall durch das von dem Ventil umfasste Halteelement in seine Ruhestellung bewegt. In der Ruhestellung weist das Halteelement seine maximale Länge auf, so dass dabei auch der mögliche Stellweg des zweiten Absperrkörperteils am größten ist, was wiederum eine maximale Ventilöffnung für den Bypassbetrieb ermöglicht. Wird das Steuerelement geschlossen, wenn an dem ersten Arbeitsfluidanschluss der Vorrichtung ein Arbeitsfluid unter Druck anliegt, strömt dieses hingegen über das Rückschlagventil zu der ersten Ventilöffnung und bewirkt dort eine Stellbewegung des Absperrkörpers in Richtung des dritten Führungsmittelteils des Ventils. Im Einzelnen erfolgt dabei somit nahezu zeitgleich eine entsprechende erste Stellbewegung des zweiten Absperrkörperteils, durch die der Absperrkörper infolge der Arbeitsfluiddrucks an der dritten Ventilöffnung entgegen der Haltekraft des Haltemittels seine minimale Länge einnimmt, und eine entsprechende zweite Stellbewegung des ersten Absperrkörperteils, die den Absperrkörper entlang der Ventillängsachse positioniert, mithin also die mögliche Ventilöffnung für den Bypassbetrieb druckabhängig steuert.

Wird in der so konfigurierten Vorrichtung das hydromechanische Übertragungsmittel an der ersten Ventilöffnung über den ersten Arbeitsfluidanschluss mit einem lastdruckbeaufschlagten Strömungspfad mittels einer Strömungsverbindung verbunden, so bewirkt dies eine mittelbare mechanische Stellbewegung des Absperrkörpers an der ersten Ventilöffnung bei gleichzeitigem Nachströmen von Arbeitsfluid über das Rückschlagventil zu der ersten Ventilöffnung; das hydromechanische Übertragungsmittel ist dazu in üblicher Weise mit einen hydraulisch betätigbaren Stößel zum Wandeln eines hydraulischen Drucksignals in ein proportionales mechanisches Wegsignal ausgebildet, der hydraulisch indirekt, also ohne Arbeitsfluideintrag in das Ventil, betätigbar ist. Die Stellbewegung des hydromechanischen Übertragungsmittels ist somit im Wesentlichen proportional zu der auf das Arbeitsfluid in dem Strömungspfad zu dessen Leitung in der zweiten Richtung einwirkenden Kraft bzw. Last. Durch eine geeignete konstruktive Zuordnung zu der ersten Ventilöffnung ist der Stößel unmittelbar mechanisch an den Absperrkörper, genauer an dessen erstes Absperrkörperteil, gekoppelt, so dass die Ausfahrbewegung des Stößels das erste Absperrkörperteil entgegen der Haltekraft des Haltemittels des Ventils in Richtung des zweiten Absperrkörperteils, und folglich den gesamten Absperrkörper in Richtung der dritten Ventilöffnung, verschieben kann. Um dabei, insbesondere im Falle stoßartiger Druckerhöhungen, die Gefahr einer unerwünschten Leerraum- bzw. Unterdruckbildung im Anschlussbereich, genauer im ersten Führungsmittelteil des Ventils, auszuschließen und gleichzeitig die Totzeit weiter zu verkürzen, ist die erste Ventilöffnung zusätzlich mit dem Strömungspfad zur Leitung des Volumenstroms des Arbeitsfluids in der ersten Richtung über das Rückschlagventil verbunden. Dieses Rückschlagventil, das vorzugsweise mit einer Druckfeder als Stellmittel ausgebildet ist, öffnet bei einer definierten Schaltschwelle in der Zulaufrichtung des Arbeitsfluids zu der ersten Ventilöffnung und sperrt den Arbeitsfluidfluss in der Gegenrichtung. Über das Rückschlagventil ist so ein definiertes und weitestgehend verzögerungsfreies Nachströmen des Arbeitsfluids in das erste Führungsmittelteil des Ventils unter Vermeidung einer unerwünschten Leerraum- bzw. Unterdruckbildung möglich; eine Leerraum- bzw. Unterdruckbildung innerhalb eines Ventils führt bekanntermaßen zu instabilem Schaltverhalten mit undefinierten Schaltstellungen und ist deshalb zu vermeiden.

Bei einem Volumenstrom des Arbeitsfluids in dem Strömungspfad in der ersten Richtung, bewirkt eine Erhöhung des Arbeitsfluiddrucks an dem ersten Arbeitsfluidanschluss der erfindungsgemäßen Vorrichtung also eine Vorpositionierung des Absperrkörpers des Ventils an der ersten Ventilöffnung durch das hydromechanische Übertragungsmittel in Richtung seiner Schließstellung, unter Nachströmen des Arbeitsfluids über die Strömungsverbindung zwischen dem ersten und dritten Arbeitsfluidanschluss und das Rückschlagventil zu dem ersten Ventilanschluss. Eine Erhöhung des Arbeitsfluiddrucks an dem dritten Arbeitsfluidanschluss hat so eine Bewegung des vorpositionierten Absperrkörpers in seine Schließstellung zur Folge, die wiederum ein Steuern des Volumenstroms des Arbeitsfluids in dem Strömungspfad von der zweiten in die erste Richtung ermöglicht. Mit anderen Worten: Durch die lastdruckabhängige Vorpositionierung des Absperrkörpers des Ventils verringert sich nicht nur der Stellweg des Absperrkörpers bis zum abdichtenden Anliegen an dem dritten Führungsmittel im Bereich der dritten Ventilöffnung, sondern auch das dafür erforderliche Arbeitsfluidvolumen, das für diese Stellbewegung über die erste Ventilöffnung in das Ventil nachströmen muss. Im Ergebnis ermöglicht die erfindungsgemäße Vorrichtung somit in einem Fluidsystem mit einem Verbraucher nicht nur ein lastdruckkompensiertes, sondern auch ein im Wesentlichen totzeitfreies Umschalten von einem Bypassbetrieb in einen Arbeitsbetrieb.

Erfindungsgemäß umfasst die Vorrichtung als wesentliche Komponente ein Ventil mit den Merkmalen gemäß Anspruch 1 in Kombination mit den Merkmalen gemäß Anspruch 7. Dieses Ventil zeichnet sich im Hinblick auf seine Funktion gegenüber konventionell ausgebildeten Differentialkolbenventilen neben der spezifischen Ausbildung der beiden Absperrkörperteile des Absperrkörpers insbesondere durch eine verminderte Reibung zwischen Führungsmittel und Absperrkörper aus und eignet sich daher in besonderer Weise für die angegebene Verwendung und damit zur Lösung der der Vorrichtung zugrunde liegenden Teilaufgabe. Gleichwohl kann die angegebene Vorrichtung alternativ auch mit einem konventionellen Ventil mit zweiteiligem Differentialkolben oder insbesondere mit einem Ventil mit zweiteiligem Kolben entsprechend den Merkmalen gemäß Anspruch 7, kombiniert mit einem konventionellen Führungsmittel, das etwa als Ausnehmung in einem metallischen Ventilblock oder als separates hülsen- oder becherförmiges Gehäuse jeweils mit den erforderlichen Ventilöffnungen ausgebildet ist, realisiert werden. Diese alternative Ausführungsform der Vorrichtung zum lastdruckkompensierten Steuern eines Volumenstroms eines Arbeitsfluids von einer zweiten in eine erste Richtung in einem Strömungspfad entgegen einem in der zweiten Richtung in dem Strömungspfad wirkenden zeitlich veränderlichen Lastdruck weist demnach die nachfolgend angegebenen Merkmale auf:
Ein Ventil zum Steuern eines Volumenstroms eines Arbeitsfluids in einem Strömungspfad mit einer ersten, zweiten und dritten Ventilöffnung, einem Absperrkörper, einem Führungsmittel und einem Haltemittel. Der Absperrkörper des Ventils ist dabei zwischen einer Offenstellung und einer Schließstellung beweglich ausgebildet, wobei die dritte Ventilöffnung in der Offenstellung des Ventils geöffnet ist, so dass ein Volumenstrom des Arbeitsfluids zwischen der dritten und zweiten Ventilöffnung möglich ist und wobei die dritte Ventilöffnung in der Schließstellung des Ventils durch den Absperrkörper verschlossen ist. Das Führungsmittel ist derart vorgesehen, dass es den Absperrkörper bei seiner Bewegung zwischen der Offen- und der Schließstellung führt. Das Haltemittel ist zwischen dem Führungsmittel und dem Absperrkörper in einer Weise angeordnet, dass seine Haltekraft den von dem Führungsmittel geführten Absperrkörper in der Schließstellung des Ventils vorspannt. Der von dem Ventil umfasste Absperrkörper ist zweiteilig mit einem ersten und zweiten Absperrkörperteil ausgebildet, wobei jedes der beiden Absperrkörperteile jeweils eine Mehrzahl spezifisch ausgelegter Absperrkörperbereiche zum jeweils gleitenden Zusammenwirken untereinander und mit dem Führungsmittel aufweist. Das erste Absperrkörperteil umfasst einen ersten und vierten Absperrkörperbereich, das zweite Absperrkörperteil einen zweiten, dritten und fünften Absperrkörperbereich. Die beiden Absperrkörperteile sind einander so zugeordnet, dass sie über den vierten und fünften Absperrkörperbereich ineinandergreifend verschieblich gelagert sind, und zwar so, dass über eine Relativbewegung der beiden Absperrkörperteile zueinander die Länge des Absperrkörpers entlang der von dem Führungsmittel vorgegebenen Bewegungsrichtung veränderlich ist, während gleichzeitig das erste Absperrkörperteil mit seinem ersten Absperrkörperbereich und das zweite Absperrkörperteil mit seinem zweiten Absperrkörperbereich jeweils gleitend mit dem Führungsmittel zusammenwirken. Das Haltemittel ist zwischen dem ersten Absperrkörperbereich des ersten Absperrkörperteils und dem zweiten Absperrkörperbereich des zweiten Absperrkörperteils angeordnet, so dass in seiner Ruhestellung der vierte und fünfte Absperrkörperbereich überlappen und die Länge des Absperrkörpers durch ein Verschieben der beiden Absperrkörperteile entgegen der Haltekraft des Haltemittels verringerbar ist.

Darüber hinaus umfasst die Vorrichtung in der alternativen Ausführungsform ein Drosselelement, ein Rückschlagventil, ein hydromechanisches Übertragungsmittel, einen ersten, zweiten und dritten Arbeitsfluidanschluss sowie mehrere Strömungsverbindungen. Der erste Arbeitsfluidanschluss ist zum Herstellen einer Strömungsverbindung mit dem Strömungspfad vorgesehen, welcher den Volumenstrom des Arbeitsfluids in die erste Richtung leitet. Demgegenüber dient der zweite und dritte Arbeitsfluidanschluss jeweils zum Herstellen einer Strömungsverbindung mit dem Strömungspfad, welcher den Volumenstrom des Arbeitsfluids in die zweite Richtung leitet. Eine Strömungsverbindung ist im Einzelnen zwischen dem ersten und dritten Arbeitsfluidanschluss sowie zwischen dem ersten Arbeitsfluidanschluss und der ersten Ventilöffnung ausgebildet. Die Vorrichtung umfasst zudem jeweils eine Strömungsverbindung zwischen der dritten Ventilöffnung und dem ersten Arbeitsfluidanschluss, zwischen der zweiten Ventilöffnung und dem zweiten Arbeitsfluidanschluss sowie zwischen der ersten Ventilöffnung und dem dritten Arbeitsfluidanschluss. In der Strömungsverbindung zwischen der ersten Ventilöffnung und dem dritten Arbeitsfluidanschluss sind in paralleler Anordnung das Drosselelement und das Rückschlagventil vorgesehen, so dass das Drosselelement den von der ersten Ventilöffnung weggerichteten Volumenstrom des Arbeitsfluids dämpfen kann und das Rückschlagventil das Arbeitsfluid zur ersten Ventilöffnung hinleiten kann. Das hydromechanische Übertragungsmittel ist von der Strömungsverbindung zwischen der ersten Ventilöffnung und dem ersten Arbeitsfluidanschluss umfasst und zum mechanischen Zusammenwirken mit dem Absperrkörper des Ventils an der ersten Ventilöffnung bestimmt, so dass eine Druckerhöhung in dem Strömungspfad mit dem in die erste Richtung geleiteten Arbeitsfluid über den ersten Arbeitsfluidanschluss und das hydromechanische Übertragungsmittel eine entsprechende Vorpositionierung des Absperrkörpers des Ventils an der ersten Ventilöffnung in Richtung seiner Schließstellung bewirken kann, während über die Strömungsverbindung zwischen dem ersten und dritten Arbeitsfluidanschluss und über das Rückschlagventil nahezu gleichzeitig ein Nachströmen von Arbeitsfluid zu der ersten Ventilöffnung gewährleistet werden kann. Das vollständige Schließen des Ventils kann durch eine Erhöhung des Arbeitsfluiddrucks an dem dritten Arbeitsfluidanschluss über die erste Ventilöffnung und den bereits vorpositionierten Absperrkörper bewirkt werden, was wiederum die Steuerung des Volumenstroms des Arbeitsfluids in dem Strömungspfad von der zweiten in die erste Richtung ermöglicht.

Eine derartige alternative Ausführungsvariante der erfindungsgemäßen Vorrichtung hat jedoch insbesondere den Nachteil einer erhöhten Reibung zwischen Absperrkörper und Führungsmittel und weist zudem die im Zusammenhang mit dem erfindungsgemäßen Ventil oben angegebenen wirtschaftlichen und herstellungsbezogenen Nachteile auf.

### Kurze Beschreibung der Zeichnungen

Bevorzugte Ausführungsformen der vorliegenden Erfindung werden in exemplarischer Weise nachfolgend mit Bezugnahme auf die beigefügten Zeichnungen näher erläutert. Es zeigen:
- Fig. 1: eine perspektivische Darstellung einer ersten Ausführungsform des erfindungsgemäßen Ventils;
- Fig. 2: eine weitere perspektivische Darstellung der Ventilausführung gemäß Fig. 1;
- Fig. 3: eine Seitenansicht der Ventilausführung gemäß Fig. 1;
- Fig. 4: eine Schnittdarstellung der Ventilausführung gemäß Fig. 1;
- Fig. 5: eine weitere Schnittdarstellung der Ventilausführung gemäß Fig. 1;
- Fig. 6: eine perspektivische Darstellung einer zweiten Ausführungsform des erfindungsgemäßen Ventils;
- Fig. 7: eine weitere perspektivische Darstellung der Ventilausführung gemäß Fig. 6;
- Fig. 8: eine Seitenansicht der Ventilausführung gemäß Fig. 6;
- Fig. 9: eine Schnittdarstellung der Ventilausführung gemäß Fig. 6;
- Fig. 10: eine weitere Schnittdarstellung der Ventilausführung gemäß Fig. 6;
- Fig. 11: ein Schaltschema einer hydraulischen Vorrichtung mit der zweiten Ausführungsform des erfindungsgemäßen Ventils in einem Fluidsystem;
- Fig. 12: eine konstruktive Ausführung der Vorrichtung gemäß Fig. 11 in Schnittdarstellung.

### Detaillierte Beschreibung der Erfindung

Bei den in den Zeichnungen dargestellten bevorzugten Ausführungsformen der Erfindung handelt es sich um die jeweils beste Ausführungsform. Diese jeweils beste Ausführungsform der vorliegenden Erfindung wird nachfolgend detailliert beschrieben.

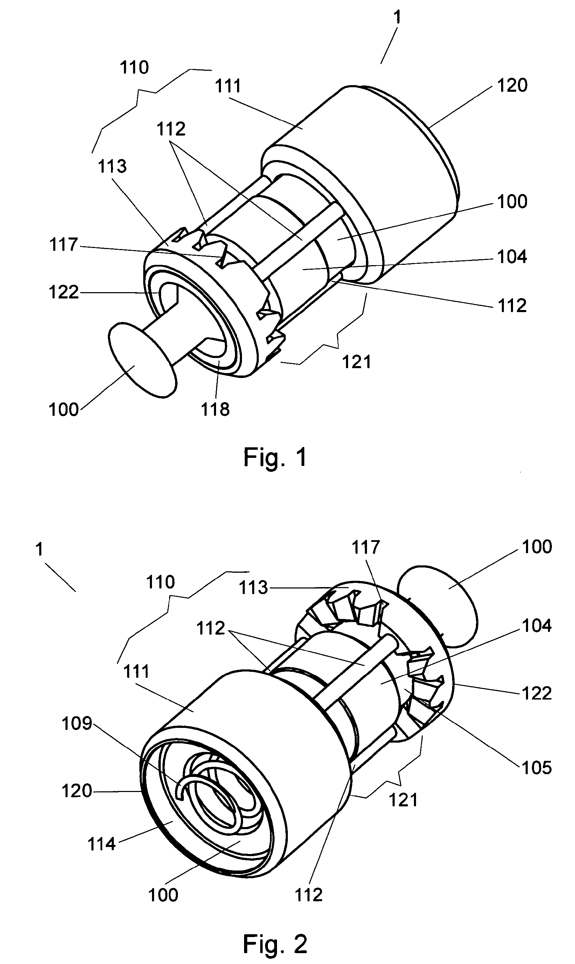

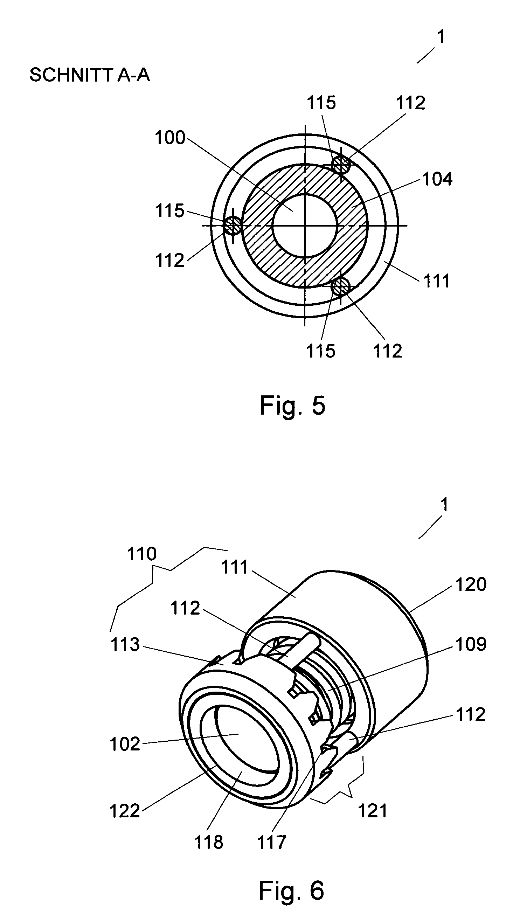

Die Fig. 1 bis 5 zeigen eine erste Ausführungsform des erfindungsgemäßen Ventils 1 mit einem einteiligen Absperrkörper 100 in unterschiedlichen Ansichten. Eine zweite Ausführungsform des Ventils 1, die sich von der ersten Ausführungsform im Wesentlichen durch eine zweiteilige Ausbildung des Absperrkörpers 100 unterscheidet, ist in jeweils korrespondierender Darstellung in den Fig. 6 bis 10 wiedergegeben. Die beiden Ventilausführungen werden im Folgenden daher jeweils unter Bezugnahme auf die entsprechenden korrespondierenden Darstellungen erläutert.

Fig. 1 und 6 zeigen die erste und zweite Ausführungsform des Ventils 1 in jeweils perspektivischer Draufsicht mit Blickrichtung von der dritten Ventilöffnung 122 zu der ersten Ventilöffnung 120. In beiden Darstellungen ist das Ventil 1 in seiner Schließstellung wiedergegeben, die auch der jeweiligen Ruhestellung des Absperrkörpers 100 entspricht. Jede der beiden Ausführungsformen umfasst ein identisch ausgebildetes Führungsmittel 110 als Ventilkörper, das den jeweiligen Absperrkörper 100 zum gleitenden Zusammenwirken entlang seiner jeweiligen Längsausdehnung umschließt. Das Führungsmittel 110 weist einen ersten und einen dritten Führungsmittelteil 111, 113 auf, der jeweils in Form einer Führungsbuchse ausgebildet ist und dessen jeweiliges freies Ende die erste bzw. dritte Ventilöffnung 120, 122 definiert; die von dem ersten Führungsmittelteil 111 umfasste Buchse ist aus Stahl mittels Drehen und Bohren, die von dem dritten Führungsmittelteil 113 umfasste Buchse aus Aluminium mittels Hochdruckgießen gefertigt. Die beiden Führungsbuchsen sind an ihren voneinander wegweisenden Enden im Randbereich angefast, um den Einbau in einen Ventilsitz zu erleichtern.

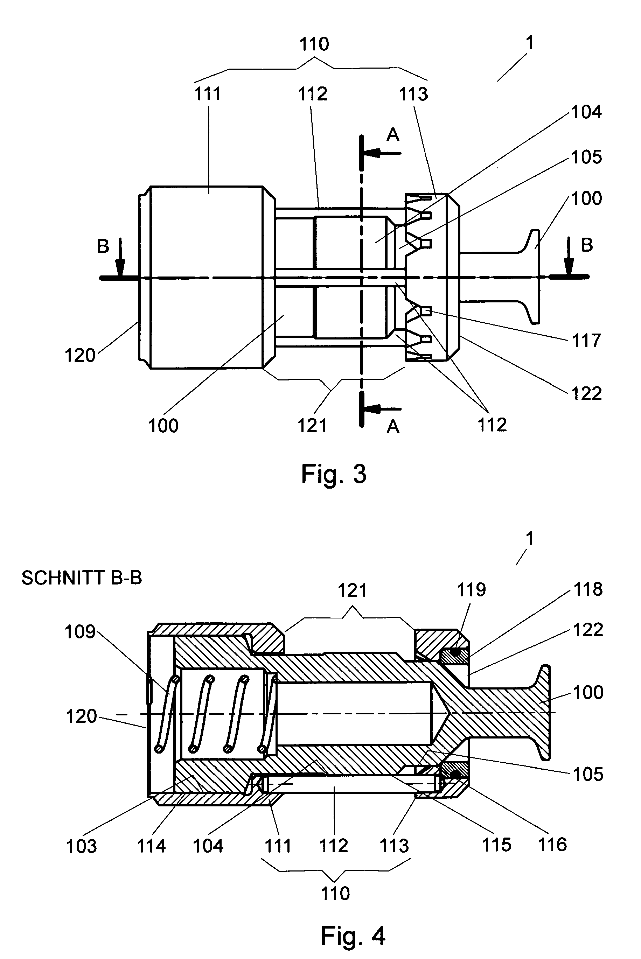

Zwischen diesen beiden Führungsbuchsen erstreckt sich ein zweiter Führungsmittelteil 112 in Form von drei, in paralleler Ausrichtung zur Längsachse des Führungsmittels 110 und zur axialen Bewegungsrichtung des Absperrkörpers 100, mit äquidistanter Beabstandung um den Absperrkörper 100 angeordneten, zylindrischen Führungsstiften (vgl. Fig. 3 bis 5 bzw. 8 bis 10). Jeder der drei Stifte ist so positioniert, dass er gleitend mit dem zweiten Absperrkörperbereich 104 des Absperrkörpers 100 bei dessen Bewegung zwischen der Schließstellung und einer Offenstellung zusammenwirkt und diesen dabei führt; der zweite Absperrkörperbereich 104 ist bei der zweiten Ventilausführung von dem zweiten Absperrkörperteil 102 umfasst. Die bei dieser Relativbewegung beteiligten Oberflächenbereiche der Führungsstifte bilden den zweiten Führungsmittelbereich 115 des zweiten Führungsmittelteils 112. Die auf diese Weise von dem ersten und dritten Führungsmittelteil 111, 113 und den Führungsstiften des zweiten Führungsmittelteils 112 begrenzten Zwischenräume bilden die zweite Ventilöffnung 121. Jeder der Führungsstifte des zweiten Führungsmittelteils 112 ist fest mit den beiden Führungsbuchsen verbunden. Die Führungsstifte sind als handelsübliche Halbzeuge aus einem Stahlstangenmaterial, das bereits die erforderliche Oberflächengüte aufweist, durch entsprechendes Ablängen gefertigt. Die Aufnahmebohrungen in den beiden Führungsbuchsen zur Herstellung einer festen Verbindung mit jeweils einem Stiftende sind als Sackbohrungen ausgeführt und so bemessen, dass eine zuverlässig feste Pressverbindung zwischen jeder Führungsbuchse und jedem Führungsstift besteht.

In beiden Ausführungsformen stellt die erste Ventilöffnung 120 den Steueranschluss zum Vorsteuern des Ventils 1 dar. Hinsichtlich der Verwendung der zweiten und dritten Ventilöffnung 121, 122 unterscheiden sich die beiden Ventilausführungen insoweit, als bei der ersten Ausführungsform der Einlass des Ventils 1 von der zweiten Ventilöffnung 121 und der Auslass von der dritten Ventilöffnung 122 gebildet wird, während bei der zweiten Ausführungsform die zweite Ventilöffnung 121 den Auslass und die dritte Ventilöffnung 122 den Einlass des Ventils 1 definiert.

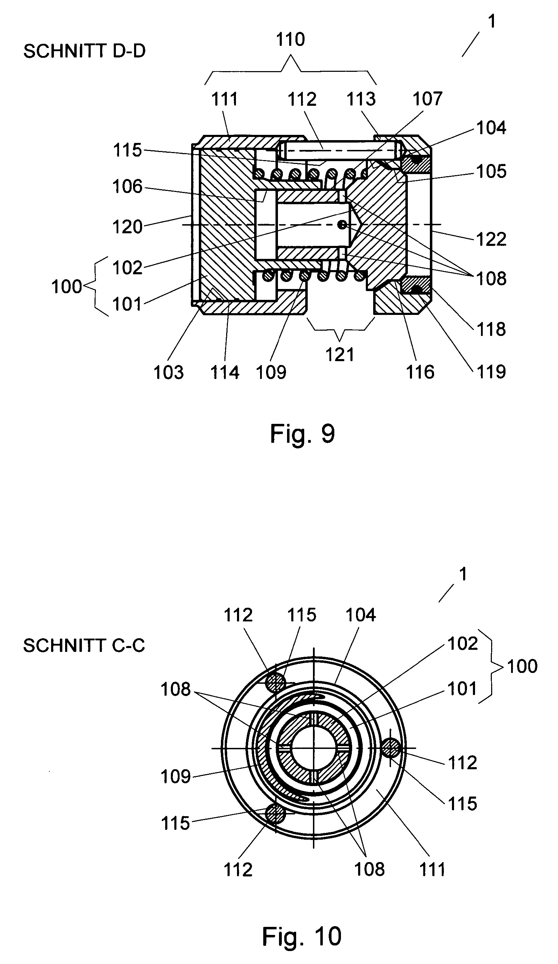

Die von dem dritten Führungsmittelteil 113 umfasste Führungsbuchse weist in ihrem an den zweiten Führungsmittelteil 112 angrenzenden Bereich einen trichterförmig sich verjüngenden Einlaufbereich (vgl. Fig. 4 bzw. 9) auf, in dem zwischen den Aufnahmebohrungen für die Führungsstifte jeweils vier äquidistant beabstandete Y-förmige Ausnehmungen 117 von der Tiefe der Sackbohrungen ausgebildet sind. Jede dieser Ausnehmungen ist als Ausfräsung über die gesamte Wandstärke der Führungsbuchse ausgeführt und mit ihrem spaltförmigen Teil in Richtung zur dritten Ventilöffnung 122 hin orientiert. Diese Ausbildung des dritten Führungsmittelteils 113 ermöglicht eine weitestgehend stetige Volumenstromänderung beim Wechsel zwischen der Schließstellung und der Offenstellung beim Betrieb des Ventils 1.

Die dem Absperrkörper 100 zugewandte Oberfläche der von dem dritten Führungsmittelteil 113 umfassten Führungsbuchse bildet den dritten Führungsmittelbereich 116 (vgl. Fig. 4 bzw. 9). Diese Führungsbuchse weist an ihrem stirnseitigen Ende eine Ausnehmung auf, in der ein selbstpositionierender ringförmiger Dichteinsatz 118 bündig mittels eines O-Rings 119 angebracht ist; der Dichteinsatz 118 ist als Drehteil aus Stahl, der O-Ring 119 in herkömmlicher Weise aus einem geeigneten Elastomer, etwa aus Synthesekautschuk, bevorzugt aus NBR (Nitril-Butadien-Kautschuk), gefertigt. Der O-Ring 119 wird dazu von einer Nut innerhalb der Mantelfäche des Dichteinsatzes 118 aufgenommen, die einen gegenüber dem O-Ring-Querschnitt geringfügig vergrößerten Querschnitt aufweist. Die Ausnehmung zur Aufnahme des Dichteinsatzes 118 ist zudem mit einem gegenüber dessen Außendurchmesser geringfügig vergrößerten Innendurchmesser ausgebildet und dient dem O-Ring 119 als Widerlager, an dem er unter Spannung anliegt. Das derart gestaltete stirnseitige Ende des dritten Führungsmittelbereichs 116 kann somit in Form des Dichteinsatzes 118 selbstpositionierend mit dem dritten Absperrkörperbereich 105 des Absperrkörpers 100 bzw. des zweiten Absperrkörperteils 102 in der Schließstellung des Ventils 1 dichtend zusammenwirken, wobei die dem Absperrkörper 100 nächstliegende Ringkante des Dichteinsatzes 118, die durch Prägen erzeugt ist, die Kontaktlinie bildet und dessen Innendurchmesser den Öffnungsdurchmesser des Ventils 1 definiert; der dritte Absperrkörperbereich 105 des Absperrkörpers 100 bzw. des zweiten Absperrkörperteils 102 ist dazu im Kontaktbereich mit einer Fase ausgebildet. Durch diese Art der Befestigung kann der Dichteinsatz 118, etwa im Falle einer Beschädigung, besonders einfach ausgewechselt werden, was sich nicht nur in vorteilhafter Weise auf die Wartungskosten, sondern auch auf die Ventillebensdauer auswirkt.

Der Absperrkörper 100 ist bei der ersten wie bei der zweiten Ventilausführung als Drehteil aus Stahl hergestellt und in dem Führungsmittel 110 gleitend gelagert. Bei der ersten Ausführungsform des Ventils 1 weist der Absperrkörper 100 an seinem auslassseitigen Ende einen stempelförmigen Vorsprung zur Verbesserung des Schaltverhaltens des Ventils 1 auf. Dieser Vorsprung ist einstückig mit dem Absperrkörper 100 ausgebildet und so gestaltet, dass er beim Betrieb des Ventils 1 in jeder Position des Absperrkörpers 100 aus der dritten Ventilöffnung 122 herausragt und bei der Ventilmontage durch den ringförmigen Dichteinsatz 118 in dem dritten Führungsmittelteil 113 führbar ist. In der zweiten Ausführungsform des Ventils 1 ist das entsprechende stirnseitige Ende des Absperrkörpers 100 eben ausgebildet, ohne aus der dritten Ventilöffnung 122 herauszuragen.

Jede der beiden Ventilausführungen weist ein Haltemittel 109 in Form einer zylindrischen Druckfeder aus Federstahl auf, durch deren Haltekraft der Absperrkörper 100 in seiner Schließstellung gegen das Führungsmittel 110 vorspannbar ist; die jeweils einzusetzende Feder wird entsprechend den bei dem Ventilbetrieb auftretenden Arbeitsfluiddrücken gewählt. Im Einzelnen ist die Anordnung des Haltemittels 109 bei der ersten Ventilausführung den Fig. 2 und 4, bei der zweiten Ventilausführung den Fig. 6 bis 10 zu entnehmen.

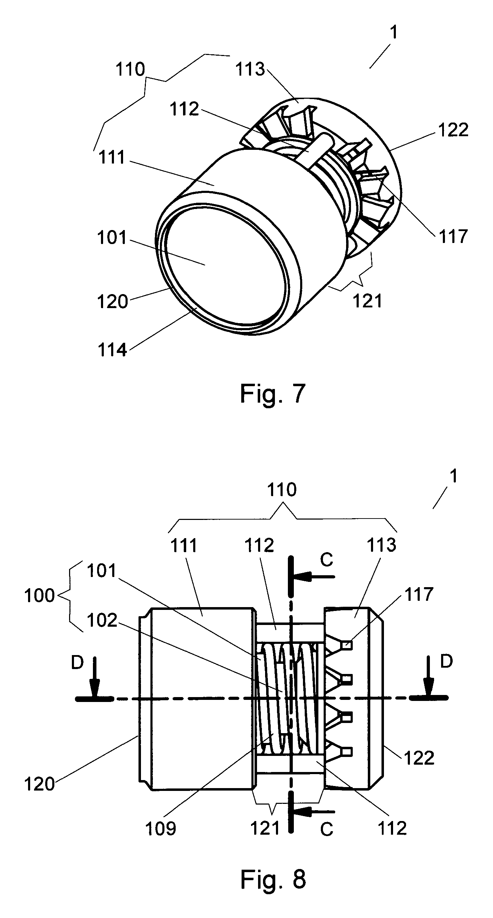

Fig. 2 und 7 zeigen die erste und zweite Ausführungsform des Ventils 1 in jeweils perspektivischer Draufsicht mit Blickrichtung von der ersten Ventilöffnung 120 zu der dritten Ventilöffnung 122; in der ersten Ventilöffnung 120 ist in beiden Fällen der Absperrkörper 100 in seiner jeweiligen Ruhestellung zu erkennen. Die erste Ventilöffnung 120 ist jeweils kreisförmig in dem ersten Führungsmittelteil 111 des Führungsmittels 110 ausgeformt. Der relativ zu der ersten Ventilöffnung 120 bewegliche Absperrkörper 100 weist bei beiden Ventilausführungen eine dieser Ventilöffnung, bzw. dem Steueranschluss, zugewandte ebene Stirnseite auf, was insbesondere für ein Zusammenwirken mit Stellgliedern von Vorteil ist. Gemäß Fig. 2 ist bei der ersten Ventilausführung diese ebene Stirnfläche mit einer zentrischen Sackbohrung versehen, die zur Befestigung und Führung für die als Haltemittel 109 verwendete zylindrische Druckfeder ausgelegt ist. Die Feder ist in der Sackbohrung derart befestigt, dass sie in dem gezeigten unbelasteten Zustand in den von dem ersten Führungsmittelbereich 114 begrenzten Innenraum des ersten Führungsmittelteils 111 hineinragt. Auf diese Weise kann beim Betrieb des Ventils die Feder über die erste Ventilöffnung 120 komprimiert werden, um den Absperrkörper 100 in seiner Schließposition zu halten.

In den Fig. 3 und 8 ist die erste und zweite Ausführungsform des Ventils 1 jeweils in Seitenansicht mit jeweils geschlossener dritter Ventilöffnung 122 dargestellt. Die Fig. 4 zeigt die erste Ventilausführung in einer Schnittdarstellung entlang der Schnittlinie B-B, die Fig. 5 in einer weiteren Schnittdarstellung entlang der Schnittlinie A-A, jeweils gemäß Fig. 3. Entsprechende Schnittdarstellungen der zweiten Ventilausführung sind in der Fig. 9 entlang der Schnittlinie D-D und in der Fig. 10 entlang der Schnittlinie C-C jeweils gemäß Fig. 8 wiedergegeben.

Das Zusammenwirken von Absperrkörper 100 und Führungsmittel 110 sowie die spezifische Ausbildung des ein- bzw. zweiteiligen Absperrkörpers 100 sind insbesondere den Fig. 4 bzw. 9 zu entnehmen. Nach Fig. 4 ist der Absperrkörper der ersten Ventilausführung einstückig in der Form eines Kreiszylinders mit entlang der Zylinderlängsachse unterschiedlichen Durchmessern gefertigt. Das Führungsmittel 110 und der Absperrkörper 100 sind auf einer gemeinsamen Längsachse angeordnet, so dass der Absperrkörper bei seiner Stellbewegung von dem ersten und zweiten Führungsmittelbereich 114, 115 des ersten und zweiten Führungsmittelteils 111, 112 geführt wird und in seiner Schließstellung an dem dritten Führungsmittelbereich 116 des dritten Führungsmittelteils 113 anliegt. Dazu weist der Absperrkörper 100 an seinem der ersten Ventilöffnung 120 zugeordneten Ende mit dem ersten Absperrkörperbereich 103 den größten Außendurchmesser auf. Mit dem dritten Absperrkörperbereich 105 ist der Absperrkörper 100 der dritten Ventilöffnung 122 zugeordnet, so dass sich der zweite Absperrkörperbereich 104 zwischen dem ersten und dritten Absperrkörperbereich 103, 105 befindet. Der Außendurchmesser des Absperrkörpers 100 ist im zweiten Absperrkörperbereich 104 gegenüber dem im ersten Absperrkörperbereich 103 verringert, während er im dritten Absperrkörperbereich 105 gegenüber dem im zweiten Absperrkörperbereich 104 verringert ist; die zum gleitenden Zusammenwirken vorgesehenen Oberflächen 103, 104 des Absperrkörpers 100 und 112, 114 des Führungsmittels 110 sind jeweils durch Rollieren erzeugt. In beiden Ventilausführungen ist zudem der Durchmesser des Absperrkörpers 100 im dritten Absperrkörperbereich 105 größer als der von dem Dichteinsatz 118 definierte Öffnungsdurchmesser des Ventils 1. Korrespondierend dazu ist der Innendurchmesser des ersten Führungsmittelteils 111 größer als der des zweiten Führungsmittelteils 112, dessen Innendurchmesser wiederum größer ist, als der des dritten Führungsmittelteils 113.

Im Übergangsbereich zwischen dem ersten und zweiten Absperrkörperbereich 103, 104 sowie zwischen dem zweiten und dritten Absperrkörperbereich 104, 105 ist der Absperrkörper 100 gemäß Fig. 4 jeweils mit einer Fase versehen, wobei diese Fasen derart entlang der Längsachse des Ventilkörpers angeordnet sind, dass kein Kontakt zwischen dem jeweiligen Fasenbereich und dem ersten bzw. dritten Führungsmittelteil 111, 113 in der Schließstellung des Ventils besteht. Zur weitergehenden Reduzierung der Reibung zwischen dem Absperrkörper 100 und dem ersten und zweiten Führungsmittelteil 111, 112 sind zudem die Absperrkörperbereiche 103, 104, die bei einer Bewegung des Absperrkörpers 100 gleitend mit den entsprechenden Führungsmittelbereichen 114, 115 zusammenwirken, auch hinsichtlich der Größe ihrer Wirkfläche aneinander angepasst. Bei der in Fig. 1 bis 5 dargestellten ersten Ausführungsform des Ventils 1 ist aus diesem Grund der zweite Absperrkörperbereich 104 teilweise mit einem geringeren Außendurchmesser ausgeführt.

Die zur Aufnahme der als Haltemittel 109 vorgesehenen Druckfeder bei der ersten Ventilausführung in dem Absperrkörper 100 ausgebildete Sackbohrung ist mit einem ersten Durchmesser bis zu dem im Fasenbereich zwischen dem ersten und zweiten Absperrkörperbereich 103, 104 ausgeführt. Daran schließt sich ein Bereich mit einem zweiten Durchmesser an, der gegenüber dem ersten etwas verringert ist. Dieser Bereich dient der Zentrierung der Druckfeder. Die Bohrung setzt sich mit einem gegenüber dem zweiten Durchmesser verringerten dritten Durchmesser fort und endet im Bereich des angefasten Endes des dritten Absperrkörperbereichs 105. Der erste, zweite und dritte Bohrungsdurchmesser ist jeweils so gewählt, dass der Absperrkörper 100 eine über seine gesamte Länge etwa gleiche Wandstärke, ohne Gefährdung der mechanischen Stabilität, aufweist. Durch diese Ausbildung des Absperrkörpers 100 wird, neben einer zuverlässigeren Positionierung des Haltemittels 109, insbesondere auch eine Gewichtsverringerung bewirkt, was sich beides in vorteilhafter Weise auf das dynamische Verhalten des Ventils 1 in der ersten Ausführungsform auswirkt.

Bei der gemäß den Fig. 6 bis 10 ausgebildeten zweiten Ventilausführung umfasst der Absperrkörper 100 zwei im Wesentlichen kreiszylindrische Absperrkörperteile 101, 102. Jedes dieser Absperrkörperteile ist mit seiner Zylinderachse deckungsgleich mit der Ventillängsachse angeordnet und relativ zu dem ersten, zweiten und dritten Führungsmittelteil 111, 112, 113 sowie zum jeweils anderen Absperrkörperteil entlang der Ventillängsachse verschieblich gelagert. Die beiden kreiszylindrischen Absperrkörperteile 101, 102 sind in ihrem jeweils mit der zweiten Ventilöffnung 121 korrespondierenden Bereich als Hohlzylinder ausgebildet, wobei die Außen- und Innendurchmesser so gewählt sind, dass, neben einer jeweils ausreichenden mechanischen Stabilität, der von dem ersten Absperrkörperteil 101 umfasste Hohlzylinder mit einem vierten Absperrkörperbereich 106 den von dem zweiten Absperrkörperteil 102 umfassten Hohlzylinder mit einem fünften Absperrkörperbereich 107 teilweise umschließt. In dem von dem zweiten Absperrkörperteil 102 umfassten Hohlzylinder sind vier Druckausgleichsbohrungen 108 (vgl. Fig. 10) vorgesehen, die den so gebildeten Innenraum des Absperrkörpers 100 mit dem Auslassbereich des Ventils 1, bzw. mit der zweiten Ventilöffnung 121, verbinden, mithin die relative Verschieblichkeit der beiden Absperrkörperteile 101, 102 zueinander beim Betrieb des Ventils sicherstellen. Die Länge des vierten Absperrkörperbereichs 106 ist gegenüber der Länge des fünften Absperrkörperbereichs 107 verkürzt, so dass jede Druckausgleichsbohrung 108 außerhalb des möglichen Überlappungsbereichs im fünften Absperrkörperbereich 107 angeordnet ist und der Druckausgleich stets gewährleistet ist. Das erste und zweite Absperrkörperteil 101, 102 sind im Bereich ihres jeweils größten Außendurchmessers durch Rollieren mit definierten Oberflächeneigenschaften ausgestattet, die ein gleitendes Zusammenwirken mit den in dem Führungsmittel 110 dafür vorgesehenen Führungsmittelbereichen 112, 114, welche mit einer entsprechenden Oberflächengüte gefertigt sind, ermöglichen. In gleicher Weise sind auch die Hohlzylindermantelflächen in dem vierten Absperrkörperbereich 106 des ersten Absperrkörperteils 101 und in dem fünften Absperrkörperbereich 107 des zweiten Absperrkörperteils 102 bearbeitet.

Durch eine zylindrische Druckfeder als Haltemittel 109, die beide Hohlzylinder jeweils zumindest teilweise umschließt, ohne dabei in Kontakt mit den Führungsmittelteilen 111, 112, 113 zu kommen, und welche die beiden Absperrkörperteile 101, 102 so miteinander koppelt, dass der vierte Absperrkörperbereich 106 des Hohlzylinders des ersten Absperrkörperteils 101 über etwa seine halbe Länge mit dem fünften Absperrkörperbereich 107 des Hohlzylinders des zweiten Absperrkörperteils 102 in der Schließstellung des Ventils 1 und ohne Druckbeaufschlagung an der ersten Ventilöffnung 120 überlappt, ist die relative Verschieblichkeit der beiden Absperrkörperteile 101, 102 einerseits in Bezug auf die Führungsmittelteile 111, 112, 113 und andererseits in Bezug aufeinander sichergestellt. Das erste Führungsmittelteil 111 und das Haltemittel 109 sind in jeweils axialer Richtung so bemessen, dass der Absperrkörper 100 des nicht druckbeaufschlagten Ventils mit seinem ersten Absperrkörperteil 101 nicht aus der ersten Ventilöffnung 120 herausragt, während das zweite Absperrkörperteil 102 die dritte Ventilöffnung 122 verschließt.

Aufgrund dieser bevorzugten Gestaltung des Ventils 1 und der Anpassung der als Haltemittel 109 verwendeten Druckfeder an den jeweiligen minimalen, im Betrieb des Ventils 1 an der dritten Ventilöffnung 122, bzw. dem Einlass, auftretenden Arbeitsfluiddruck, wird eine automatische Arbeitspunkteinstellung des Ventils ermöglicht. Dies ist insoweit möglich, als der Absperrkörper 100 einerseits auf Druckschwankungen an der ersten oder dritten Ventilöffnung 120, 122 durch eine Bewegung des ersten oder zweiten Absperrkörperteils 101, 102 reagieren kann. Andererseits kann der Absperrkörper 100 auf eine Änderung des Druckniveaus an der ersten Ventilöffnung 120 und/oder an der dritten Ventilöffnung 122 durch eine Veränderung seiner Länge oder Lage relativ zu der dritten Ventilöffnung 122 und/oder der ersten Ventilöffnung 120, und damit zu der zweiten Ventilöffnung 121, jeweils differenziert reagieren. Die Haltekraft der Druckfeder ist dazu jeweils so gewählt, dass bereits eine minimale Druckerhöhung in dem Arbeitsfluid an der dritten Ventilöffnung 122, bzw. dem Ventileinlass, beim Ventilbetrieb ausreicht, um das Ventil 1 zu öffnen, also das zweite Absperrkörperteil 102 zu bewegen, ohne gleichzeitige Bewegung des ersten Absperrkörperteils 101, und somit einen Volumenstrom des Arbeitsfluids durch das Ventil 1 von der dritten Ventilöffnung 122, bzw. dem Ventileinlass, zu der zweiten Ventilöffnung 121, bzw. dem Ventilauslass, zu ermöglichen; ein vollständiges Eindringen des Hohlzylinders des zweiten Absperrkörperteils 102 in den Hohlzylinder, bzw. die Bohrung, des ersten Absperrkörperteils 101 - und somit eine starre Kopplung der beiden Absperrkörperteile 101, 102 - ist erst bei einem Lastdruck des Arbeitsfluids an der dritten Ventilöffnung 122 und/oder an der ersten Ventilöffnung 120, möglich, der geeignet ist, die von der als Haltemittel 109 vorgesehenen Druckfeder bereitgestellte Haltekraft unter entsprechender Verkürzung der Federlänge zu überwinden.

Aus den Schnittdarstellungen der ersten und zweiten Ausführungsform des Ventils 1 gemäß Fig. 5 bzw. 10 gehen im Einzelnen die jeweils äquidistante Anordnung der drei zylindrischen Führungsstifte des zweiten Führungsmittelteils 112 in dem ersten Führungsmittelteil 111, die Zuordnung dieser drei Führungsstifte zu dem zweiten Absperrkörperbereich 104 des Absperrkörpers 100 und die Berührungslinien der drei Führungsstifte mit dem Absperrkörper 100, die den zweiten Führungsmittelbereich 115 des zweiten Führungsmittelteils 112 bilden, hervor. Fig. 10 ist zudem die Lage der vier Druckausgleichsbohrungen 108 in dem zweiten Absperrkörperteil 102 der zweiten Ventilausführung zu entnehmen sowie die Positionierung der als Haltemittel 109 vorgesehenen zylindrischen Druckfeder relativ zu dem jeweils ersten Führungsmittelteil 111 und Absperrkörperteil 101.

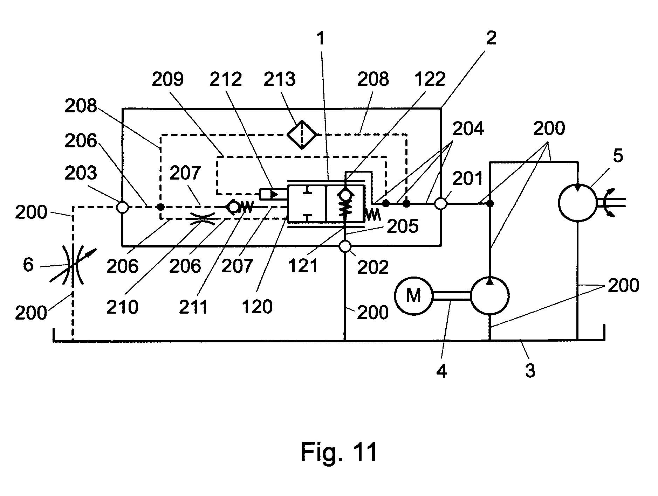

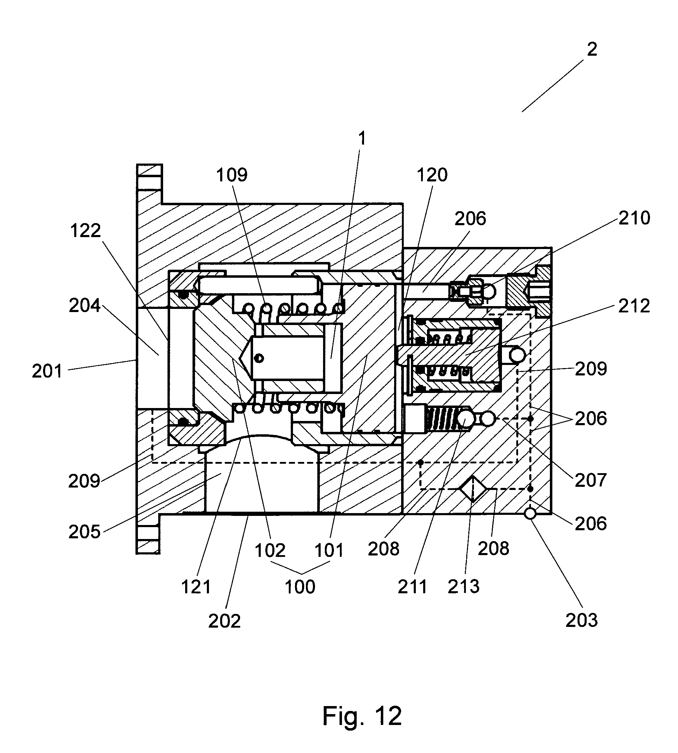

Fig. 11 und Fig. 12 zeigen eine Ausführungsform der hydraulischen Vorrichtung 2 mit der zweiten Ausführungsform des erfindungsgemäßen Ventils 1 in Form eines Schaltschemas und in konstruktiver Ausführung. Als Arbeitsfluid ist dabei ein Hydrauliköl vorgesehen.

Gemäß Fig. 11 umfasst die Vorrichtung 2 neben dem erfindungsgemäßen Ventil 1 mit zweiteiligem Absperrkörper 100 bzw. Differentialkolben (vgl. Fig. 9) ein Drosselelement 210, ein Rückschlagventil 211, ein hydromechanisches Übertragungsmittel 212 und ein Filter 213 sowie einen hydraulischen Leistungspfad von einem ersten Arbeitsfluidanschluss 201 zu der dritten Ventilöffnung 122 und weiter von der zweiten Ventilöffnung 121 zu einem zweiten Arbeitsfluidanschluss 202 sowie hydraulische Steuerleitungen von dem ersten Arbeitsfluidanschluss 201 zu der ersten Ventilöffnung 120 und zu einem dritten Arbeitsfluidanschluss 203. Das Drosselelement 210 ist in konventioneller Weise zur Dämpfung eines Volumenstroms eines Arbeitsfluids zwischen einem Einlass und einem Auslass ausgebildet und über diese beiden Anschlüsse an eine Strömungsverbindung koppelbar. Ebenso ist das Rückschlagventil 211 in üblicher Weise mit einem Kolben und einem Vorspannmittel in Form einer Druckfeder zwischen einem Einlass und einem Auslass ausgebildet, so dass beim Überschreiten einer von dem Vorspannmittel definierten Schaltschwelle durch den Druck eines Arbeitsfluids am Einlass das Rückschlagventil in seiner Durchlassrichtung öffnet, während es einen Arbeitsfluidfluss in der Gegenrichtung zwischen den beiden Anschlüssen, die mit einem Strömungspfad verbindbar sind, verhindert. Das hydromechanische Übertragungsmittel 212 umfasst zwischen einem hydraulischen und einem mechanischen Anschluss einen in einer becherförmigen Führungshülse gegen eine Druckfeder verschieblich gelagerten Stößel. Dieser Stößel wirkt derart mit der Führungshülse zusammen, dass eine Druckbeaufschlagung des hydraulischen Anschlusses durch das Arbeitsfluid eine entgegen der Rückstellkraft der Feder gerichtete Stößelbewegung an dem mechanischen Anschluss unter Vermeidung eines Arbeitsfluidübertrags zwischen den beiden Anschlüssen zur Folge hat. Das hydromechanische Übertragungsmittel 212 stellt somit einen konventionellen Druck-Weg-Wandler dar, mit dem ein hydraulisches Drucksignal in ein proportionales mechanisches Wegsignal wandelbar ist. Bei dem Filter 213 handelt es sich um ein Hydraulikfilter üblicher Bauart, das mittels eines Einlasses mit einem Strömungspfad zur Zuleitung eines Arbeitsfluids verbindbar ist und dessen Maschenweite so gewählt ist, dass Verunreinigungen im Arbeitsfluid, etwa Feststoffpartikel, zurückgehalten werden, wenn dieses aus dem Filter über den Auslass austritt. Zur Strömungsverbindung der genannten einzelnen Komponenten sind in der Vorrichtung 2 eine erste und zweite hydraulische Leistungsleitung 204, 205 sowie eine erste, zweite, dritte und vierte hydraulische Steuerleitung 206, 207, 208, 209 vorgesehen. Diese Leitungen können grundsätzlich in flexibler und/oder starrer Ausführung aus den im Hydraulikbereich üblicherweise verwendeten Materialien, also etwa aus Metall, Kunststoff oder Gummi, gefertigt sein und als separate Elemente und/oder als Ausnehmungen in einem bevorzugt aus Metall gefertigten Gehäuse ausgebildet sein. Die Steuerleitungen 206, 207, 208, 209 unterscheiden sich von den Leistungsleitungen 204, 205 in dieser Ausführungsform der Vorrichtung 2 lediglich durch ihren geringeren Innendurchmesser (s. Fig. 12).

Die Beschaltung der Vorrichtung 2, bzw. deren Strömungsverbindung mit einem Fluidsystem, erfolgt über den ersten, zweiten und dritten Arbeitsfluidanschluss 201, 202, 203. Der erste Arbeitsfluidanschluss 201 ist über die erste Leistungsleitung 204 mit der dritten Ventilöffnung 122 und der zweite Arbeitsfluidanschluss 202 über die zweite Leistungsleitung 205 mit der zweiten Ventilöffnung 121 zum Herstellen der jeweiligen Strömungsverbindung verbunden. Der dritte Arbeitsfluidanschluss 203 ist zum einen über die erste Steuerleitung 206, welche das Drosselelement 210 umfasst, und über die dazu parallel geführte zweite Steuerleitung 207, die das Rückschlagventil 211 umfasst, zum Herstellen der Strömungsverbindung mit der ersten Ventilöffnung 120 verbunden. Zum anderen ist der dritte Arbeitsfluidanschluss 203 über die dritte Steuerleitung 208 zum Herstellen der Strömungsverbindung mit dem ersten Arbeitsfluidanschluss 201 verbunden, wobei in der dritten Steuerleitung 208 das Filter 213 angeordnet ist. Eine vierte Steuerleitung 209 ist zum Herstellen der Strömungsverbindung zwischen dem an der ersten Ventilöffnung 120 angebrachten hydromechanischen Übertragungsmittel 212 und dem ersten Arbeitsfluidanschluss 201 vorgesehen.

Der von der Vorrichtung 2 zu steuernde Volumenstrom des Arbeitsfluids kann gemäß Fig. 11 durch eine motorbetriebene Pumpe 4 mit fester Drehrichtung erzeugt werden, die in einem Strömungspfad 200 zwischen einem Vorratsbehälter 3 zum Bereitstellen des Arbeitsfluids und einem Verbraucher 5 in Form eines Hydromotors angeordnet ist. Beim Einschalten der Pumpe 4 strömt das Arbeitsfluid in dem Strömungspfad 200 in der ersten Richtung vom Vorratsbehälter 3 zum Verbraucher 5, um diesen anzutreiben. Das bei diesem Arbeitsbetrieb aus dem Verbraucher 5 ausströmende Arbeitsfluid fließt durch den vom Verbraucher 5 weitergeführten Strömungspfad 200 in der zweiten Richtung zurück in den Vorratsbehälter 3.

Der Strömungspfad 200 weist zwischen der Pumpe 4 und dem Verbraucher 5 eine Strömungsverbindung mit dem ersten Arbeitsfluidanschluss 201 der Vorrichtung 2 auf und ist von dem zweiten Arbeitsfluidanschluss 202 weitergeführt in den Vorratsbehälter 3, mit dem auch der dritte Arbeitsfluidanschluss 203 mittels eines Strömungspfads 200 verbunden ist. Solange der dritte Arbeitsfluidanschluss 203 geöffnet ist, strömt somit das Arbeitsfluid bei eingeschalteter Pumpe 4 durch das Ventil 1 gesteuert in den Vorratsbehälter 3 zurück, ohne dass der abtriebsseitig belastete Verbraucher 5 angetrieben wird. Über den Strömungspfad 200, den ersten Arbeitsfluidanschluss 201, die dritte Steuerleitung 209 und das hydromechanische Übertragungsmittel 212 erfolgt bei diesem Bypassbetrieb des Verbrauchers 5 gleichzeitig eine Vorpositionierung des Kolbens - Absperrkörper 100 gemäß Fig. 12 - in Schließrichtung des Ventils 1, die proportional zu der jeweils an dem Verbraucher 5 angreifenden Abtriebslast ist. Das Umschalten der Strömungsrichtung des Volumenstroms des Arbeitsfluids in dem Strömungspfad 200 von der zweiten in die erste Richtung, bzw. vom Bypassbetrieb in den Arbeitsbetrieb des Verbrauchers 5, kann somit durch ein Schließen des dritten Arbeitsfluidanschlusses 203 der Vorrichtung 2 lastdruckunabhängig und weitestgehend totzeitfrei erfolgen. Der Strömungspfad 200 weist dazu zwischen dem dritten Arbeitsfluidanschlusses 203 und dem Vorratsbehälter 3 ein steuerbares Drosselelement 6 auf.

Fig. 12 zeigt eine konstruktive Ausführung der Vorrichtung 2 gemäß Fig. 11 in Schnittdarstellung. Diese umfasst einen quaderförmigen metallischen Ventilblock mit einer zentralen Bohrung zwischen zweien seiner Begrenzungsflächen und in paralleler Ausrichtung zu seiner dazu orthogonalen Grundfläche. Die zentrale Bohrung ist von der ersten dieser beiden Begrenzungsflächen her als Sackbohrung zur Aufnahme des Ventils 1 in der Ausführung gemäß Fig. 9 ausgebildet und mit verringertem Durchmesser, der an die dritte Ventilöffnung 122 angepasst ist, zu der dazu kongruenten Begrenzungsfläche weitergeführt. Der sich zwischen dieser Begrenzungsfläche und der Sackbohrung erstreckende Bohrungsabschnitt bildet die erste hydraulische Leistungsleitung 204 deren Ende in der Begrenzungsfläche den ersten Arbeitsfluidanschluss 201 darstellt. Über diesen ist die Vorrichtung 2 fluidmechanisch mit weiteren hydraulischen Steuerungskomponenten verbindbar, wie sie etwa von einem hydraulischen Antriebssystem für einen Aufzug umfasst sind; zur lecksicheren Verbindung sind an der Grund- und Deckfläche des quaderförmigen Ventilblocks der Vorrichtung 2 Ausformungen mit Bohrungen für eine Schraubverbindung vorgesehen. Orthogonal durch den als Sackbohrung ausgebildeten Ventilsitz hindurch erstreckt sich eine weitere Sackbohrung von der Grundfläche des Ventilblocks der Vorrichtung 2 aus. Diese bildet die zweite hydraulische Leistungsleitung 205 und ist so in Bezug auf das erste Ventil 1 in dem Gehäuse angeordnet, dass sie eine Strömungsverbindung mit dessen zweiter Ventilöffnung 121 ermöglicht und in der Grundfläche des Ventilblocks den zweiten Arbeitsfluidanschluss 202 bildet. Zu dessen fluidmechanischer Verbindung mit einer weiteren hydraulischen Schaltungskomponente sind in der Grundfläche des Ventilblocks Gewindebohrungen vorgesehen, die wiederum eine lecksichere Schraubverbindung des Ventilblocks mit einer betreffenden Schaltungskomponente in üblicher Weise ermöglichen.

Über eine weitere Schraubverbindung ist der Ventilblock schließlich lecksicher mit einem ebenfalls metallischen Übertragungsmittelblock verbunden. Dieser umfasst, neben dem hydromechanischen Übertragungsmittel 212, das Drosselelement 210 und das Rückschlagventil 211 in einer Weise, dass der Stößel des hydromechanischen Übertragungsmittels 212 an der ersten Ventilöffnung 120 zentrisch mit dem ersten Absperrkörperteil 101 des Absperrkörpers 100 des Ventils 1 zusammenwirkt, während über die erste Steuerleitung 206 mit dem Drosselelement 210 und über die zweite Steuerleitung 207 mit dem Rückschlagventil 211 eine Strömungsverbindung mit der ersten Ventilöffnung 120 besteht. Weiter umfasst der Übertragungsmittelblock die dritte Steuerleitung 208 mit dem Filter 213 in Strömungsverbindung mit der ersten Steuerleitung 206 und einem Abschnitt der vierten Steuerleitung 209, die neben dem Ventilsitz des ersten Ventils 1 in dem Ventilblock in einem zweiten Abschnitt 209 bis zur ersten Leistungsleitung 204 entsprechend Fig. 11 weitergeführt ist. Die erste Steuerleitung 206 erstreckt sich innerhalb des Übertragungsmittelblocks und weist an ihrem von der Kontaktfläche mit dem Ventilblock wegweisenden Ende den dritten Arbeitsfluidanschluss 203 auf, dessen fluidmechanische Verbindung mit anderen hydraulischen Systemkomponenten wiederum mittels Gewindebohrungen in seinem Umfangsbereich zuverlässig lecksicher herstellbar ist. Wie die Leistungsleitungen sind auch die Steuerleitungen in herkömmlicher Weise durch Bohren hergestellt, wobei die Bohrungen jeweils von den Begrenzungsflächen des Ventil- bzw. Übertragungsmittelblocks her ausgeführt und dort in herkömmlicher Weise mittels Expander lecksicher verschlossen sind, wo die Weiterführung einer Strömungsverbindung an der jeweiligen Begrenzungsfläche des betreffenden Metallblocks nicht vorgesehen ist.

Die in Fig. 12 dargestellte Vorrichtung 2 ermöglicht somit ein lastdruckunabhängiges und weitestgehend totzeitfreies Umschalten der Strömungsrichtung des Volumenstroms des Arbeitsfluids in einem mit der Vorrichtung 2 verbundenen Strömungspfad, wie es im Einzelnen im Zusammenhang mit Fig. 11 angegeben ist. Dank ihrer modularen Ausbildung ist die Vorrichtung 2 zudem nicht nur platzsparend und kostengünstig herstellbar, sondern zeichnet sich insbesondere auch durch ihre Wartungsfreundlichkeit und entsprechend niedrige Wartungskosten aus.

### Bezugszeichenliste

- 1: Ventil
- 100: Absperrkörper
- 101-102: erstes bis zweites Absperrkörperteil
- 103-107: erster bis fünfter Absperrkörperbereich
- 108: Druckausgleichsbohrung
- 109: Haltemittel
- 110: Führungsmittel
- 111-113: erster bis dritter Führungsmittelteil
- 114-116: erster bis dritter Führungsmittelbereich
- 117: Ausnehmung
- 118: Dichteinsatz
- 119: O-Ring
- 120-122: erste bis dritte Ventilöffnung
- 2: Vorrichtung
- 200: Strömungspfad
- 201-203: erster bis dritter Arbeitsfluidanschluss
- 204-205: erste bis zweite Leistungsleitung
- 206-209: erste bis vierte Steuerleitung
- 210: Drosselelement
- 211: Rückschlagventil
- 212: hydromechanisches Übertragungsmittel
- 213: Filter
- 3: Vorratsbehälter
- 4: motorbetriebene Pumpe
- 5: Verbraucher
- 6: steuerbares Drosselelement

## Patentansprüche

1. Ventil (1) zum Steuern eines Volumenstroms eines Arbeitsfluids in einem Strömungspfad, aufweisend eine erste Ventilöffnung (120), eine zweite Ventilöffnung (121), eine dritte Ventilöffnung (122), einen Absperrkörper (100), der zwischen einer Offenstellung, in welcher die dritte Ventilöffnung (122) zum Ermöglichen eines Volumenstroms des Arbeitsfluids zwischen der zweiten und dritten Ventilöffnung (121, 122) geöffnet ist, und einer Schließstellung, in welcher die dritte Ventilöffnung (122) durch den Absperrkörper (100) verschlossen ist, beweglich ist, ein Führungsmittel (110) zum Führen des Absperrkörpers (100) zwischen der Offen- und der Schließstellung und ein Haltemittel (109) zum Ausüben einer Haltekraft auf den Absperrkörper (100) in der Schließstellung, **dadurch gekennzeichnet, dass** der Absperrkörper (100) wenigstens einteilig ausgebildet ist und das Führungsmittel (110) in aufeinanderfolgender Anordnung einen ersten Führungsmittelteil (111) mit einem ersten Führungsmittelbereich (114), einen zweiten Führungsmittelteil (112) mit einem zweiten Führungsmittelbereich (115) und einen dritten Führungsmittelteil (113) mit einem dritten Führungsmittelbereich (116) in fester Verbindung aufweist, wobei der erste und dritte Führungsmittelteil (111, 113) zum Umschließen des Absperrkörpers (100) ausgebildet sind und der zweite Führungsmittelteil (112) eine Mehrzahl von Stiften in paralleler Ausrichtung zu der Bewegungsrichtung des Absperrkörpers (100) umfasst, so dass die Bewegung des Absperrkörpers (100) relativ zu dem Führungsmittel (110) unter gleitendem Zusammenwirken mit dem ersten und zweiten Führungsmittelbereich (114, 115) und das Verschließen der dritten Ventilöffnung (122) durch den Absperrkörper (100) unter abdichtendem Zusammenwirken mit dem dritten Führungsmittelbereich (116) erfolgen kann, wobei der zweite Führungsmittelbereich (115) einen Teil der Oberfläche wenigstens eines der Stifte umfasst, und wobei der erste Führungsmittelteil (111) die erste Ventilöffnung (120) zum Ausüben einer Stellkraft auf den Absperrkörper (100) in Richtung der dritten Ventilöffnung (122), der zweite Führungsmittelteil (112) die zweite Ventilöffnung (121) und der dritte Führungsmittelteil (113) die dritte Ventilöffnung (122) umfassen.

2. Ventil gemäß Anspruch 1, **dadurch gekennzeichnet, dass** das Führungsmittel (110) mit jeweils einem vom ersten über den zweiten zum dritten Führungsmittelteil (111, 112, 113) abnehmenden oder zunehmenden Innendurchmesser und der Absperrkörper (100) mit jeweils einem entsprechenden ersten, zweiten und dritten Absperrkörperbereich (103, 104, 105) mit jeweils korrespondierendem Außendurchmesser ausgebildet sind, so dass die Bewegung des Absperrkörpers (100) relativ zu dem Führungsmittel (110) von dem dritten oder dem ersten Führungsmittelteil (113, 111) begrenzbar ist.

3. Ventil gemäß Anspruch 1 oder 2, **dadurch gekennzeichnet, dass** der dritte Führungsmittelteil (113) in seinem an den zweiten Führungsmittelteil (112) angrenzenden Bereich eine Mehrzahl von Ausnehmungen (117), vorzugsweise in U-, V- und/oder Y-Form, und/oder eine Fase aufweist, so dass die Bewegung des Absperrkörpers (100) innerhalb des dritten Führungsmittelteils (113) eine stetige Änderung der effektiven Fläche der dritten Ventilöffnung (122) ermöglicht.

4. Ventil gemäß einem der vorausgehenden Ansprüche, **dadurch gekennzeichnet, dass** der dritte Führungsmittelteil (113) in seinem dritten Führungsmittelbereich (116) einen selbstpositionierenden ringförmigen Dichteinsatz (118) zum abdichtenden Zusammenwirken mit dem Absperrkörper (100) beim Verschließen der dritten Ventilöffnung (122) in lösbarer Verbindung umfasst, wobei der Dichteinsatz (118) in einer Weise ausgebildet ist, dass er den dritten Absperrkörperbereich (105) des Absperrkörpers (100) in der Schließstellung entlang einer kreisförmigen Kontaktlinie dichtend berührt.

5. Ventil gemäß einem der vorausgehenden Ansprüche, **dadurch gekennzeichnet, dass** der Absperrkörper (100) einteilig ausgebildet ist und durch die Haltekraft des Haltemittels (109) zum Zusammenwirken mit dem Führungsmittel (110) in seiner Bewegungsrichtung zum dritten Führungsmittelteil (113) hin vorspannbar ist, so dass die Haltekraft des Haltemittels (109) einer Bewegung des Absperrkörpers (100) aus der Schließ- in die Offenstellung entgegenwirkt.

6. Ventil gemäß Anspruch 5, **dadurch gekennzeichnet, dass** das Haltemittel (109) eine Druckfeder umfasst, wobei die Druckfeder an einem Ende an der der ersten Ventilöffnung (120) zugewandten stirnseitigen Außenfläche des Absperrkörpers (100) oder an der Innenfläche einer in dieser Außenfläche ausgebildeten Ausnehmung befestigt ist und mit dem anderen Ende in den ersten Führungsmittelteil (111) ragt, so dass der Absperrkörper (100) mittels der Druckfeder über die erste Ventilöffnung (120) in Richtung der dritten Ventilöffnung (122) vorspannbar ist.

7. Ventil gemäß einem der Ansprüche 1 bis 4, **dadurch gekennzeichnet, dass** der Absperrkörper (100) zweiteilig, mit einem ersten und zweiten Absperrkörperteil (101, 102) ausgebildet ist, wobei das erste Absperrkörperteil (101) den ersten und einen vierten Absperrkörperbereich (103, 106) und das zweite Absperrkörperteil (102) den zweiten und dritten sowie einen fünften Absperrkörperbereich (104, 105, 107) aufweisen, wobei der vierte und fünfte Absperrkörperbereich (106, 107) derart verschieblich ineinandergreifend gelagert sind, dass die Länge des Absperrkörpers (100) veränderlich ist, und wobei das Haltemittel (109) zwischen dem ersten und zweiten Absperrkörperbereich (103, 104) in einer Weise angeordnet ist, dass in seiner Ruhestellung der vierte und fünfte Absperrkörperbereich (106, 107) überlappen und die Länge des Absperrkörpers (100) durch ein Verschieben der beiden Absperrkörperteile (101, 102) entgegen der Haltekraft des Haltemittels (109) verringerbar ist.

8. Ventil gemäß Anspruch 7, **dadurch gekennzeichnet, dass** das erste Absperrkörperteil (101) zusätzlich mit dem zweiten Absperrkörperbereich (104) zum gleitenden Zusammenwirken mit dem zweiten Führungsmittelbereich (115) ausgebildet ist.

9. Ventil gemäß Anspruch 7 oder 8, **dadurch gekennzeichnet, dass** das Haltemittel (109) zum Zusammenwirken mit dem ersten und zweiten Absperrkörperteil (101, 102) des Absperrkörpers (100) eine Druckfeder umfasst, wobei die Druckfeder in einer Weise ausgelegt ist, dass die Länge des Absperrkörpers (100) in der Ruhestellung der Druckfeder durch eine an der, der ersten Ventilöffnung (120) zugewandten, stirnseitigen Außenfläche des ersten Absperrkörperteils (101) in Richtung der dritten Ventilöffnung (122) und/oder eine an der, der dritten Ventilöffnung (122) zugewandten, stirnseitigen Außenfläche des zweiten Absperrkörperteils (102) in Richtung der ersten Ventilöffnung (120) jeweils entgegen der Haltekraft der Druckfeder wirkende Stellkraft verringerbar ist.

10. Ventil gemäß Anspruch 9, **dadurch gekennzeichnet, dass** die Druckfeder an einem Ende an der Außenfläche des ersten Absperrkörperteils (101), an dem dem ersten Absperrkörperbereich (103) zugewandten Ende des vierten Absperrkörperbereichs (106), und am anderen Ende an der Außenfläche des zweiten Absperrkörperteils (102), an dem dem zweiten Absperrkörperbereich (104) zugewandten Ende des fünften Absperrkörperbereichs (107), oder an einem Ende an der Innenfläche des ersten Absperrkörperteils (101) und am anderen Ende an der Innenfläche des zweiten Absperrkörperteils (102) befestigt ist, so dass der Absperrkörper (100) jeweils mittels der Druckfeder über die erste Ventilöffnung (120) in Richtung der dritten Ventilöffnung (122) vorspannbar ist.

11. Ventil gemäß einem der vorausgehenden Ansprüche, **dadurch gekennzeichnet, dass** der Absperrkörper (100) sowie der erste und dritte Führungsmittelteil (111, 113) aus Stahl, Messing, Aluminium oder Kunststoff und jeder der von dem zweiten Führungsmittelteil (112) umfassten Stifte aus Stahl, vorzugsweise als Fertigteil, ausgebildet sind und jeder Stahlstift an einem Ende mit dem ersten Führungsmittelteil (111) und am anderen Ende mit dem dritten Führungsmittelteil (113) durch eine Pressverbindung fest verbunden ist.

12. Ventil gemäß einem der vorausgehenden Ansprüche, **dadurch gekennzeichnet, dass** der Absperrkörper (100) an seinem dem dritten Führungsmittelteil (113) zugeordneten Ende einen stempelförmigen Vorsprung aufweist, wobei der stempelförmige Vorsprung in einer Weise ausgebildet ist, dass der Absperrkörper (100) durch einen von der zweiten zu der dritten Ventilöffnung (121, 122) gerichteten Volumenstrom des Arbeitsfluids nach dessen Austritt aus der dritten Ventilöffnung (122) in Richtung der Haltekraft des Haltemittels (109) bewegbar ist.

13. Verfahren zur Herstellung eines Ventils (1) zum Steuern eines Volumenstroms eines Arbeitsfluids in einem Strömungspfad, aufweisend eine erste Ventilöffnung (120), eine zweite Ventilöffnung (121), eine dritte Ventilöffnung (122), einen wenigstens einteiligen Absperrkörper (100), der zwischen einer Offenstellung, in welcher die dritte Ventilöffnung (122) zum Ermöglichen eines Volumenstroms des Arbeitsfluids zwischen der zweiten und dritten Ventilöffnung (121, 122) geöffnet ist, und einer Schließstellung, in welcher die dritte Ventilöffnung (122) durch den Absperrkörper (100) verschlossen ist, beweglich ist, ein Führungsmittel (110) zum Führen des Absperrkörpers (100) zwischen der Offen- und der Schließstellung und ein Haltemittel (109) zum Ausüben einer Haltekraft auf den Absperrkörper (100) in der Schließstellung, umfassend die folgenden Schritte:
- Bereitstellen des Absperrkörpers (100) zum gleitenden Zusammenwirken mit dem Führungsmittel (110);
- Bereitstellen eines ersten Führungsmittelteils (111) mit einem ersten Führungsmittelbereich (114) zum Umschließen des Absperrkörpers (100) und gleitenden Zusammenwirken mit diesem sowie zum Ausbilden der ersten Ventilöffnung (120);
- Bereitstellen eines dritten Führungsmittelteils (113) mit einem dritten Führungsmittelbereich (116) zum Umschließen und gleitenden Zusammenwirken mit dem Absperrkörper (100) sowie zum Ausbilden der dritten Ventilöffnung (122);
- Bereitstellen einer Mehrzahl von Stiften zum Ausbilden eines zweiten Führungsmittelteils (112) mit einem zweiten Führungsmittelbereich (115) zum gleitenden Zusammenwirken mit dem Absperrkörper (100) sowie zum Ausbilden der zweiten Ventilöffnung (121);
- Herstellen einer Verbindung zwischen einem Ende jedes Stifts und dem ersten Führungsmittelteil (111) sowie zwischen dem anderen Ende jedes Stifts und dem dritten Führungsmittelteil (113) unter paralleler Ausrichtung jedes Stifts zu der Bewegungsrichtung des Absperrkörpers (100), so dass zwischen dem ersten und dritten Führungsmittelteil (111, 113) der zweite Führungsmittelteil (112) mit der zweiten Ventilöffnung (121), an dem freien Ende des ersten Führungsmittelteils (111) die erste Ventilöffnung (120), an dem freien Ende des dritten Führungsmittelteils (113) die dritte Ventilöffnung (122) und aus dem ersten, zweiten und dritten Führungsmittelteil (111, 112, 113) in aufeinanderfolgender Anordnung und in fester Verbindung das Führungsmittel (110) zum Führen des Absperrkörpers (100) gebildet werden;
- Bereitstellen des Haltemittels (109) zum Ausüben der Haltekraft auf den Absperrkörper (100) in der Schließstellung;
- Anordnen des Haltemittels (109) an dem Absperrkörper (100), so dass die Haltekraft des Haltemittels (109) in Richtung der Schließstellung des Absperrkörpers (100) wirkt;
- Anordnen des Absperrkörpers (100) und des Haltemittels (109) in dem Führungsmittel (110), so dass die Bewegung des Absperrkörpers (100) relativ zu dem Führungsmittel (110) unter gleitendem Zusammenwirken mit dem ersten Führungsmittelbereich (114) und einem Teil der Oberfläche wenigstens eines der Stifte des zweiten Führungsmittelbereichs (115) sowie das Verschließen der dritten Ventilöffnung (122) durch den Absperrkörper (100) unter abdichtendem Zusammenwirken mit dem dritten Führungsmittelbereich (116) und unter Wirkung der Haltekraft des Haltemittels (109) erfolgen.

14. Vorrichtung (2) zum lastdruckkompensierten Steuern eines Volumenstroms eines Arbeitsfluids von einer zweiten in eine erste Richtung in einem Strömungspfad (200) entgegen einem in der zweiten Richtung in dem Strömungspfad wirkenden zeitlich veränderlichen Lastdruck, **dadurch gekennzeichnet, dass** die Vorrichtung (2) ein Ventil (1) gemäß Anspruch 7 oder 8, ein Drosselelement (210), ein Rückschlagventil (211), ein hydromechanisches Übertragungsmittel (212), einen ersten Arbeitsfluidanschluss (201) zum Herstellen einer Strömungsverbindung mit dem Strömungspfad zum Leiten des Volumenstroms des Arbeitsfluids in die erste Richtung sowie einen zweiten und dritten Arbeitsfluidanschluss (202, 203) zum jeweiligen Herstellen einer Strömungsverbindung mit dem Strömungspfad zum Leiten des Volumenstroms des Arbeitsfluids in die zweite Richtung, eine Strömungsverbindung zwischen jeweils dem ersten Arbeitsfluidanschluss (201) und dem dritten Arbeitsfluidanschluss (203) sowie der ersten Ventilöffnung (120) umfasst und weiterhin jeweils eine Strömungsverbindung zwischen der dritten Ventilöffnung (122) und dem ersten Arbeitsfluidanschluss (201), zwischen der zweiten Ventilöffnung (121) und dem zweiten Arbeitsfluidanschluss (202) sowie zwischen der ersten Ventilöffnung (120) und dem dritten Arbeitsfluidanschluss (203) vorgesehen ist, wobei die Strömungsverbindung zwischen der ersten Ventilöffnung (120) und dem dritten Arbeitsfluidanschluss (203) in paralleler Anordnung das Drosselelement (210) zur Dämpfung des Volumenstroms des Arbeitsfluids von der ersten Ventilöffnung (120) und das Rückschlagventil (211) zum Leiten des Arbeitsfluids zu der ersten Ventilöffnung (120) und die Strömungsverbindung zwischen der ersten Ventilöffnung (120) und dem ersten Arbeitsfluidanschluss (201) das hydromechanische Übertragungsmittel (212) zum mechanischen Bewegen des Absperrkörpers (100) an der ersten Ventilöffnung (120) umfassen, so dass, bei einem Volumenstrom des Arbeitsfluids in dem Strömungspfad (200) in der ersten Richtung, eine Erhöhung des Arbeitsfluiddrucks an dem ersten Arbeitsfluidanschluss (201) eine Vorpositionierung des Absperrkörpers (100) des Ventils (1) an der ersten Ventilöffnung (120) durch das hydromechanische Übertragungsmittel (212) in Richtung seiner Schließstellung, unter Nachströmen des Arbeitsfluids über die Strömungsverbindung zwischen dem ersten und dritten Arbeitsfluidanschluss (201, 203) und über das Rückschlagventil (211) zu der ersten Ventilöffnung (120), und eine Erhöhung des Arbeitsfluiddrucks an dem dritten Arbeitsfluidanschluss (203) eine Bewegung des vorpositionierten Absperrkörpers (100) in seine Schließstellung zum Steuern des Volumenstroms des Arbeitsfluids in dem Strömungspfad (2) von der zweiten in die erste Richtung ermöglichen.

## Claims

1. Valve (1) for controlling a volume flow of a working fluid in a flow path, comprising a first valve opening (120), a second valve opening (121), and a third valve opening (122), a shut-off body (100) movable to and fro between an open-position in which the third valve opening (122) is open to allow a volume flow of the working fluid between said second and third valve opening (121, 122) and a close-position in which the third valve opening (122) is closed by the shut-off body (100), a guide means (110) for guiding the shut-off body (100) between the open- and the close-position, and a retaining means (109) for exerting a retaining force on the shut-off body (100) in the close-position, **characterized in that** the shut-off body (100) is formed at least one-part and the guide means (110) has in successive arrangement a first guide means part (111) with a first guide means region (114), a second guide means part (112) with a second guide means region (115), and a third guide means part (113) with a third guide means region (116) in permanent joint, wherein the first and third guide means part (111, 113) are formed to surround the shut-off body (100) and the second guide means part (112) comprises a plurality of pins in parallel alignment with the direction of movement of the shut-off body (100) so that the movement of the shut-off body (100) relative to the guide means (110) can take place in sliding co-operation with said first and second guide means region (114, 115) and closing of the third valve opening (122) by the shut-off body (100) in sealing co-operation with the third guide means region (116), wherein the second guide means region (115) comprises a part of the surface of at least one of the pins, and wherein said first guide means part (111) comprises the first valve opening (120) for exerting an actuating force on the shut-off body (100) in the direction of the third valve opening (122), the second guide means part (112) the second valve opening (121), and the third guide means part (113) the third valve opening (122).

2. Valve according to claim 1, **characterized in that** the guide means (110) is formed with an inner diameter which is reduced or increased from the first to the second through to the third guide means part (111, 112, 113) in each case and the shut-off body (100) is formed with a respective first, second, and third shut-off body region (103, 104, 105) with a corresponding outer diameter in each case so that the movement of the shut-off body (100) relative to the guide means (110) can be limited by the third or the first guide means part (113, 111).

3. Valve according to claim 1 or 2, **characterized in that** the third guide means part (113) has in its region adjacent to the second guide means part (112) a plurality of recesses (117), preferably in U-, V-, and/or Y-shape, and/or a bevel so that the movement of the shut-off body (100) within the third guide means part (113) enables a continuous change in the effective area of the third valve opening (122).

4. Valve according to one of the preceding claims, **characterized in that** the third guide means part (113) in its third guide means region (116) comprises a self-positioning ring-shaped seal insert (118) for a sealing co-operation with the shut-off body (100) during the closure of the third valve opening (122) in a releasable connection, wherein the seal insert (118) is formed in such a way that it contacts the third shut-off body region (105) of the shut-off body (100) in the close-position along a circular contact line in a sealing manner.

5. Valve according to one of the preceding claims, **characterized in that** the shut-off body (100) is formed one-part and can be biased by the retaining force of the retaining means (109) for co-operating with the guide means (110) in its direction of movement toward the third guide means part (113) so that the retaining force of the retaining means (109) counteracts a movement of the shut-off body (100) from the close- to the open-position.

6. Valve according to claim 5, **characterized in that** the retaining means (109) comprises a compression spring, wherein the compression spring is attached at one end to the frontal outer surface of the shut-off body (100) facing the first valve opening (120) or to the inner surface of a recess formed in said outer surface and with the other end extends into the first guide means part (111) so that the shut-off body (100) can be biased by the compression spring via the first valve opening (120) towards the third valve opening (122).

7. Valve according to one of claims 1 to 4, **characterized in that** the shut-off body (100) is formed two-part with a first and second shut-off body part (101, 102), wherein the first shut-off body part (101) comprises the first and a fourth shut-off body region (103, 104) and the second shut-off body part (102) the second, and third, and a fifth shut-off body region (104, 105, 107), wherein said fourth and fifth shut-off body region (106, 107) are supported slidably interlocking in such a way that the length of the shut-off body (100) is variable, and wherein the retaining means (109) is arranged in such a way between the first and second shut-off body region (103, 104) that in its rest position the fourth and fifth shut-off body region (106, 107) overlap and the length of the shut-off body (100) can be reduced by displacing the two shut-off body parts (101, 102) against the retaining force of the retaining means (109).

8. Valve according to claim 7, **characterized in that** the first shut-off body part (101) in addition is formed with the second shut-off body region (104) for sliding co-operation with the second guide means region (115).

9. Valve according to claim 7 or 8, **characterized in that** the retaining means (109) for co-operating with said first and second shut-off body part (101, 102) of the shut-off body (100) comprises a compression spring, wherein the compression spring is designed in such a way that the length of the shut-off body (100) in the rest position of the compression spring can be reduced by an actuating force acting on the frontal outer surface of the first shut-off body part (101) facing the first valve opening (120) in the direction of the third valve opening (122) and/or on the frontal outer surface of the second shut-off body part (102) facing the third valve opening (122) toward the first valve opening (120) in each case against the retaining force of the compression spring.

10. Valve according to claim 9, **characterized in that** the compression spring is attached at one end to the outer surface of the first shut-off body part (101) at the end of the fourth shut-off body region (106) facing the first shut-off body region (103) and at the other end to the outer surface of the second shut-off body part (102) at the end of the fifth shut-off body region (107) facing the second shut-off body region (104) or at one end to the inner surface of the first shut-off body part (101) and at the other end to the inner surface of the second shut-off body part (102) so that the shut-off body (100) can be biased in each case by the compression spring via the first valve opening (120) toward the third valve opening (122).

11. Valve according to one of the preceding claims, **characterized in that** the shut-off body (100), and the first, and third guide means part (111, 113) are made of steel, brass, aluminum, or plastic and each of the pins comprised in the second guide means part (112) is made of steel, preferably as a finished part, and each steel-pin is permanently fixed at one end to the first guide means part (111) and at the other end to the third guide means part (113) by a compression joint.

12. Valve according to one of the preceding claims, **characterized in that** the shut-off body (100) is provided with a pistil-shaped projection at its end associated with the third guide means part (113), wherein the pistil-shaped projection is formed in a manner that the shut-off body (100) is movable in the direction of the retaining force of the retaining means (109) by a volume flow of the working fluid directed from the second to the third valve opening (121, 122) after exiting from the third valve opening.

13. A method for manufacturing a valve (1) for controlling a volume flow of a working fluid in a flow path, having a first valve opening (120), a second valve opening (121), a third valve opening (122), an at least one-part shut-off body (100) movable between an open-position in which the third valve opening (122) is open to allow a volume flow of the working fluid between said second and third valve opening (121, 122) and a close-position in which the third valve opening (122) is closed by the shut-off body (100), a guide means (110) for guiding the shut-off body (100) between the open- and the close-position, and a retaining means (109) for exerting a retaining force on the shut-off body (100) in the close-position, comprising the steps of:
- Providing the shut-off body (100) for sliding co-operation with said guide means (110);
- Providing a first guide means part (111) having a first guide means region (114) for enclosing the shut-off body (100), and for sliding co-operation with the latter, and for forming the first valve opening (120);
- Providing a third guide means part (113) having a third guide means region (116) for enclosing the shut-off body (100), and for sliding co-operation with the latter, and for forming the third valve opening (122);
- Providing a plurality of pins for forming a second guide means part (112) having a second guide means region (115) for sliding co-operation with the shut-off body (100) and for forming the second valve opening (121);
- Establishing a connection between one end of each pin and said first guide means part (111), and between the other end of each pin and the third guide means part (113) in parallel alignment with each pin to the moving direction of the shut-off body (100) so that between the first and third guide means part (111, 113) the second guide means part (112) is formed having the second valve opening (121), the first valve opening (120) is formed at the free end of the first guide means part (111), the third valve opening (122) is formed at the free end of the third guide means part (113), and the guide means (110) for guiding the shut-off body (100) is formed from the first, second, and third guide means part (111, 112, 113) in successive arrangement and in permanent joint;
- Providing the retaining means (109) for exerting the retaining force on the shut-off body (100) in the close-position;
- Placing the retaining means (109) on the shut-off body (100) so that the retaining force of the retaining means (109) acts in the direction of the close-position of the shut-off body (100);
- Disposing the shut-off body (100) and the retaining means (109) in the guide means (110) so that the movement of the shut-off body (100) relative to the guide means (110) takes place in sliding co-operation with the first guide means region (114) and a part of the surface of at least one of the pins of the second guide means region (115) and the closing of the third valve opening (122) by the shut-off body (100) under sealing co-operation with the third guide means region (116) and under the action of the retaining force of the retaining means (109).

14. Apparatus (2) for the load-pressure-compensated control of a volume flow of a working fluid from a second to a first direction in a flow path (200) against a time varying load pressure acting in said second direction in the flow path, **characterized in that** the apparatus (2) comprises a valve (1) according to claim 7 or 8, a throttle element (210), a check valve (211), a hydro-mechanical transmission means (212), a first working fluid port (201) for establishing a flow connection with the flow path for conducting the volume flow of the working fluid in the first direction, and a second, and third working fluid port (202, 203) for establishing a particular flow connection with the flow path for conducting the volume flow of the working fluid in the second direction, a flow connection between said first working fluid port (201) and each of said third working fluid port (203) and the first valve opening (120), and further a flow connection is provided between each the third valve opening (122) and said first working fluid port (201), between the second valve opening (121) and said second working fluid port (202), and between the first valve opening (120) and said third working fluid port (203), wherein the flow connection between the first valve opening (120) and said third working fluid port (203) comprises in a parallel arrangement the throttle element (210) for damping the volume flow of the working fluid from the first valve opening (120) and the check valve (211) for conducting the working fluid to the first valve opening (120) and the flow connection between the first valve opening (120) and said first working fluid port (201) comprises the hydro-mechanical transmission means (212) for mechanically moving the shut-off body (100) at the first valve opening (120) so that at a volume flow of the working fluid in the flow path (200) in the first direction an increase of the working fluid pressure at said first working fluid port (201) enables a pre-positioning of the shut-off body (100) of the valve (1) at the first valve opening (120) in the direction of its close-position by the hydro-mechanical transmission means (212) under working fluid flow through the flow connection between said first and third working fluid port (201, 203) and via the check valve (211) to the first valve opening (120) and an increase in the working fluid pressure at said third working fluid port (203) enables a movement of the pre-positioned shut-off body (100) to its close-position for routing the volume flow of the working fluid in the flow path (200) from the second to the first direction.

## Revendications

1. Soupape (1) pour commander un débit volumétrique d'un fluide de travail dans un chemin d'écoulement, comprenant un premier orifice de soupape (120), un deuxième orifice de soupape (121), un troisième orifice de soupape (122), un élément d'obturation (100), déplaçable entre une position ouverte, dans laquelle le troisième orifice de soupape (122) est ouvert pour permettre un débit volumétrique du fluide de travail entre le deuxième et le troisième orifice de soupape (121, 122), et une position fermée, dans laquelle le troisième orifice de soupape (122) est obturé par l'élément d'obturation (100), un moyen de guidage (110) pour guider l'élément d'obturation (100) entre la position ouverte et la position fermée et un moyen de maintien (109) pour exercer une force de maintien sur l'élément d'obturation (100) dans la position fermée, **caractérisé en ce que** l'élément d'obturation (100) est formée au moins d'une seule pièce et le moyen de guidage (110) comprenant dans un agencement successif en liaison fixe une première partie du moyen de guidage (111) avec une première zone du moyen de guidage (114), une deuxième partie du moyen de guidage (112) avec une deuxième zone du moyen de guidage (115) et une troisième partie du moyen de guidage (113) avec une troisième zone du moyen de guidage (116), dans lequel la première et la troisième partie du moyen de guidage (111, 113) sont formées pour entourer l'élément d'obturation (100) et la deuxième partie du moyen de guidage (112) comprend une pluralité de tiges dans une orientation parallèle à la direction du mouvement de l'élément d'obturation (100), de sorte que le mouvement de l'élément d'obturation (100) par rapport au moyen de guidage (110) peut être effectué en coopération coulissante avec la première et la deuxième zone du moyen de guidage (114, 115) et la fermeture du troisième orifice de soupape (122) par l'élément d'obturation (100) en coopération de manière étanche avec la troisième zone du moyen de guidage (116), dans lequel la deuxième zone du moyen de guidage (115) comprend une partie de la surface au moins de l'une des tiges, et dans lequel la première partie du moyen de guidage (111) comprend le premier orifice de soupape (120) pour exercer une force de rappel sur l'élément d'obturation (100) en direction du troisième orifice de soupape (122), la deuxième partie du moyen de guidage (112) le deuxième orifice de soupape (121) et la troisième partie du moyen de guidage (113) le troisième orifice de soupape (122).

2. Soupape selon la revendication 1, **caractérisé en ce que** le moyen de guidage (110) est formé respectivement avec un diamètre interne qui est diminué ou augmenté de la première par le biais de la deuxième à la troisième partie du moyen de guidage (111, 112, 113) et l'élément d'obturation (100) respectivement avec une correspondante première, deuxième et troisième zone de l'élément d'obturation (103, 104, 105) chacune avec un diamètre extérieur correspondant, de sorte que le mouvement de l'élément d'obturation (100) par rapport au moyen de guidage (110) peut être limité par la troisième ou la première partie du moyen de guidage (113, 111).

3. Soupape selon la revendication 1 ou 2, **caractérisé en ce que** la troisième partie du moyen de guidage (113) dans sa zone adjacente à la deuxième partie du moyen de guidage (112) comprend une pluralité d'évidements (117), de préférence en U, V et/ou Y forme, et/ou un chanfrein, de sorte que le mouvement de l'élément d'obturation (100) dans la troisième partie du moyen de guidage (113) permet un changement continu de la superficie ouverte efficace du troisième orifice de soupape (122).

4. Soupape selon l'une des revendications précédentes, **caractérisé en ce que** la troisième partie du moyen de guidage (113) dans sa troisième zone du moyen de guidage (116) comprend en liaison amovible un insert d'étanchéité annulaire auto positionné (118) pour coopérer avec l'élément d'obturation (100) de manière étanche lors de la fermeture de le troisième orifice de soupape (122), dans laquelle l'insert d'étanchéité (118) est conçu de manière à ce qu'il touche la troisième zone de l'élément d'obturation (105) de l'élément d'obturation (100) dans la position de fermeture le long d'une ligne circulaire du contact.

5. Soupape selon l'une des revendications précédentes, **caractérisé en ce que** l'élément d'obturation (100) est formée d'une seule pièce et peut être précontrainte par la force de maintien du moyen de maintien (109) pour coopérer avec le moyen de guidage (110) dans son direction de déplacement vers la troisième partie du moyen de guidage (113), de sorte que la force de maintien du moyen de maintien (109) résiste au déplacement de l'élément d'obturation (100) de la position fermée dans la position ouverte.

6. Soupape selon la revendication 5, **caractérisé en ce que** le moyen de maintien (109) comprend un ressort de compression, dans lequel le ressort de compression est fixé à une extrémité à la surface extérieure frontale de l'élément d'obturation (100) sur son côté tourné vers le premier orifice de soupape (120) ou sur la surface intérieure dans un évidement formé dans cette surface extérieure et l'autre extrémité fait saillie dans la première partie du moyen de guidage (111), de sorte que l'élément d'obturation (100) peut être précontrainte par le ressort de compression vers le premier orifice de soupape (120) en direction du troisième orifice de soupape (122).

7. Soupape selon l'une des revendications 1 à 4, **caractérisé en ce que** l'élément d'obturation (100) est formé en deux pièces, avec une première et une seconde pièce de l'élément d'obturation (101, 102), dans lequel la première pièce de l'élément d'obturation (101) comprend la première et la quatrième zone de l'élément d'obturation (103, 106) et la seconde pièce de l'élément d'obturation (102) la deuxième et la troisième ainsi qu'une cinquième zone de l'élément d'obturation (104, 105, 107), dans lequel la quatrième et la cinquième zone de l'élément d'obturation (106, 107) sont montées interfoliés de manière déplaçable ce que la longueur de l'élément d'obturation (100) est variable et dans lequel le moyen de maintien (109) entre la première et la deuxième zone de l'élément d'obturation (103, 104) est agencé de telle sorte que dans son position de repos, la quatrième et la cinquième zone de l'élément d'obturation (106, 107) se chevauchent et la longueur de l'élément d'obturation (100) peut être réduite par un déplacement des deux pièces de l'élément d'obturation (101, 102) contre la force de maintien du moyen de maintien (109).

8. Soupape selon la revendication 7, **caractérisé en ce que** la première partie de l'élément d'obturation (101) est réalisée en supplément avec la deuxième zone de l'élément d'obturation (104) pour la coopération coulissante avec la deuxième zone du moyen de guidage (115).

9. Soupape selon la revendication 7 ou 8, **caractérisé en ce que** le moyen de maintien (109) pour coopérer avec la première et la seconde pièce (101, 102) de l'élément d'obturation (100) comprend un ressort de compression, dans lequel le ressort de compression est conçu de façon à ce que la longueur de l'élément d'obturation (100) dans la position de repos du ressort de compression peut être réduite par une force de réglage agissante à la surface extérieure frontale de l'extrémité de la première pièce de l'élément d'obturation (101) tournée vers le premier orifice de soupape (120) en direction du troisième orifice de soupape (122) et/ou à la surface extérieure frontale de la seconde pièce de l'élément d'obturation (102) tournée vers le troisième orifice de soupape (122) en direction du premier orifice de soupape (120) respectivement à l'encontre de la force de maintien du ressort de compression.

10. Soupape selon la revendication 9, **caractérisé en ce que** le ressort de compression est fixé à une extrémité à la surface extérieure de la première pièce de l'élément d'obturation (101) à l'extrémité de la quatrième zone de l'élément d'obturation (106) tournée vers la première zone de l'élément d'obturation (103) et à l'autre extrémité à la surface extérieure de la seconde pièce de l'élément d'obturation (102) a l'extrémité de la cinquième zone de l'élément d'obturation (107) tournée vers la deuxième zone de l'élément d'obturation (104) ou à une extrémité à la surface intérieure de la première pièce de l'élément d'obturation (101) et à l'autre extrémité à la surface intérieure de la seconde pièce de l'élément d'obturation (102), de sorte que l'élément d'obturation (100) est précontraint dans chaque cas par le ressort de compression vers le premier orifice de soupape (120) en direction du troisième orifice de soupape (122).

11. Soupape selon l'une des revendications précédentes, **caractérisé en ce que** l'élément d'obturation (100) ainsi que la première et la troisième partie du moyen de guidage (111, 113) sont en acier, laiton, aluminium ou matière plastique, et chacune des tiges comprise dans la deuxième partie du moyen de guidage (112) est réalisé en acier, de préférence comme élément préfabriqué, et chaque tige d'acier est fixée de façon permanente à une extrémité à la première partie de moyens de guidage (111) et à l'autre extrémité à la troisième partie de moyens de guidage (113) par une connexion sertie.

12. Soupape selon l'une des revendications précédentes, **caractérisé en ce que** l'élément d'obturation (100) ayant à son extrémité associé à la troisième partie du moyen de guidage (113) une saillie en forme de pistil, dans lequel la saillie en forme de pistil est formée de telle manière que l'élément d'obturation (100) est déplaçable en direction de la force de maintien du moyen de maintien (109) par un débit volumétrique du fluide de travail dirigé du deuxième au troisième orifice de soupape (121, 122) après son sortie du troisième orifice de soupape (122).

13. Procédé de fabrication d'une soupape (1) pour commander un débit volumétrique d'un fluide de travail dans un chemin d'écoulement, comprenant un premier orifice de soupape (120), un deuxième orifice de soupape (121), un troisième orifice de soupape (122), un élément d'obturation (100) au moins formé d'une seule pièce mobile entre une position ouverte, dans laquelle le troisième orifice de soupape (122) est ouvert pour permettre un débit volumétrique du fluide de travail entre le deuxième et le troisième orifice de soupape (121, 122), et une position fermée, dans laquelle le troisième orifice de soupape (122) est obturé par l'élément d'obturation (100), un moyen de guidage (110) pour guider l'élément d'obturation (100) entre la position ouverte et la position fermée et un moyen de maintien (109) pour exercer une force de maintien sur l'élément d'obturation (100) dans la position fermée, comprenant les étapes consistant à:
- Fournir l'élément d'obturation (100) pour la coopération coulissante avec le moyen de guidage (110);
- Fournir une première partie des moyens de guidage (111) avec une première zone du moyen de guidage (114) pour entourer l'élément d'obturation (100) et coopérer de manière coulissante avec celle-ci ainsi que pour former le premier orifice de soupape (120);
- Fournir une troisième partie du moyen de guidage (113) avec une troisième zone du moyen de guidage (116) pour entourer et coopérer de manière coulissante avec l'élément d'obturation (100) ainsi que pour former le troisième orifice de soupape (122);
- Fournir une pluralité de tiges pour former une deuxième partie du moyen de guidage (112) avec une deuxième zone du moyen de guidage (115) pour coopérer de manière coulissante avec l'élément d'obturation (100) ainsi que pour former le deuxième orifice de soupape (121);
- Établir une connexion entre une extrémité de chaque tige et la première partie du moyen de guidage (111) et entre l'autre extrémité de chaque tige et la troisième partie du moyen de guidage (113) dans une orientation parallèle de chaque tige en direction de déplacement de l'élément d'obturation (100), de sorte qu'entre la première et la troisième partie du moyen de guidage (111, 113) sont formés la deuxième partie du moyen de guidage (112) avec le deuxième orifice de soupape (121), le premier orifice de soupape (120) à l'extrémité libre de la première partie du moyen de guidage (111), le troisième orifice de soupape (122) à l'extrémité libre de la troisième partie du moyen de guidage (113) et, à partir de la première, deuxième et troisième partie du moyen de guidage (111, 112, 113) dans un agencement successif et en liaison fixe, le moyen de guidage (110) pour guider l'élément d'obturation (100);
- Fournir le moyen de maintien (109) pour appliquer la force de maintien sur l'élément d'obturation (100) dans la position fermée;
- Disposer le moyen de maintien (109) à l'élément d'obturation (100), de sorte que la force de maintien du moyen de maintien (109) agit en direction de la position fermée de l'élément d'obturation (100);
- Disposer l'élément d'obturation (100) et le moyen de maintien (109) dans le moyen de guidage (110), de sorte que le mouvement de l'élément d'obturation (100) par rapport au moyen de guidage (110) ait lieu en coopération coulissante avec la première zone du moyen de guidage (114) et une partie de la surface au moins de l'une des tiges de la deuxième zone du moyen de guidage (115) ainsi que la fermeture du troisième orifice de soupape (122) par l'élément d'obturation (100) en coopération étanche avec la troisième zone du moyen de guidage (116) et sous l'effet de la force de maintien du moyen de maintien (109).

14. Dispositif (2) pour commander un débit volumétrique d'un fluide de travail d'une seconde dans une première direction dans un chemin d'écoulement (200) contre une charge de la pression variable dans le temps agissante dans la seconde direction dans le chemin d'écoulement, **caractérisé en ce que** le dispositif (2) comprend une soupape (1) selon la revendication 7 ou 8, un élément d'étranglement (210), un clapet antiretour (211), un moyen de transmission hydromécanique (212), un premier raccordement de fluide de travail (201) pour établir une connexion d'écoulement avec le chemin d'écoulement pour guider le débit volumétrique du fluide de travail dans la première direction ainsi qu'un deuxième et un troisième raccordement de fluide de travail (202, 203) pour établir respectivement une connexion d'écoulement avec le chemin d'écoulement pour guider le débit volumétrique du fluide de travail dans la seconde direction, une connexion d'écoulement respectivement entre le premier raccordement de fluide de travail (201) et le troisième raccordement de fluide de travail (203) ainsi que le premier orifice de soupape (120), et en outre une connexion d'écoulement est prévu respectivement entre le troisième orifice de soupape (122) et le premier raccordement de fluide de travail (201), entre le deuxième orifice de soupape (121) et le deuxième raccordement de fluide de travail (202) ainsi qu'entre le premier orifice de soupape (120) et le troisième raccordement de fluide de travail (203), dans lequel ladite connexion d'écoulement entre le premier orifice de soupape (120) et le troisième raccordement de fluide de travail (203) comprend dans un agencement parallèle l'élément d'étranglement (210) pour amortir le débit volumétrique du fluide de travail qui sort du premier orifice de soupape (120) et le clapet antiretour (211) pour diriger le fluide de travail vers le premier orifice de soupape (120) et ladite connexion d'écoulement entre le premier orifice de soupape (120) et le premier raccordement de fluide de travail (201) comprend le moyen de transmission hydromécanique (212) pour déplacer mécaniquement l'élément d'obturation (100) au premier orifice de soupape (120), de sorte qu'en cas d'un débit volumétrique du fluide de travail dans le chemin d'écoulement (200) dans la première direction une augmentation de la pression du fluide de travail au premier raccordement de fluide de travail (201) permet un prépositionnement de l'élément d'obturation (100) de la soupape (1) au premier orifice de soupape (120) en direction de son position fermée par le moyen de transmission hydromécanique (212) sous l'écoulement du fluide de travail par ladite connexion d'écoulement entre le premier et le troisième raccordement de fluide de travail (201, 203) et par le clapet antiretour (211) vers le premier orifice de soupape (120) et une augmentation de la pression du fluide de travail au troisième raccordement de fluide de travail (203) permet un déplacement de l'élément d'obturation (100) prépositionnée dans son position fermée pour commander le débit volumétrique du fluide de travail dans le chemin d'écoulement (2) de la seconde à la première direction.
